# EUROPEAN PATENT SPECIFICATION

(11) **EP 3 218 385 B1**
(45) Date of publication and mention of the grant of the patent: **23.01.2019**
(21) Application number: 15797165.6
(22) Date of filing: 13.11.2015
(51) Int. Cl.: C07F 17/00, C07F 7/08, C08F 4/00, C08F 10/00

(54) **METALLOCENES AND THEIR USE AS POLYMERIZATION CATALYSTS**
METALLOCENE UND DEREN VERWENDUNG ALS POLYMERISIERUNGSKATALYSATOREN
MÉTALLOCÈNES ET LEUR UTILISATION À TITRE DE CATALYSEURS DE POLYMÉRISATION

(30) Priority: 13.11.2014 GB 201420213; 01.10.2015 GB 201517383
(43) Date of publication of application: 20.09.2017
(73) Proprietor: SCG Chemicals Co., Ltd., Bangkok 10800 (TH)
(72) Inventor: O'HARE, Dermot, Oxford OX1 3TA (GB); BUFFET, Jean-Charles, Oxford OX1 3TA (GB)
(74) Representative: HGF Limited
(86) International application number: PCT/GB2015/053456
(87) International publication number: WO 2016/075485

(56) References cited:
- WO-A1-2006/117285
- WO-A1-2011/051705
- LICHT, E. H. ET AL: "Synthesis and characterization of bis(cyclopentadienyl)zirconium dichloride complexes with .omega.-fluorenyl alkyl or silyl substituents and their application in catalytic ethylene polymerization", JOURNAL OF MOLECULAR CATALYSIS A: CHEMICAL, vol. 164, no. 1-2, 2000, pages 9-23, XP002753461, ISSN: 1381-1169, DOI: 10.1016/S1381-1169(00)00184-9

## Description

### INTRODUCTION

The present invention relates to catalysts. More specifically, the present invention relates to particular metallocene catalysts, and the use of such catalysts in polyolefin polymerization reactions. Even more specifically, the present invention relates to unsymmetrical metallocene catalysts, and the use of such catalysts in ethylene polymerization reactions.

### BACKGROUND OF THE INVENTION

It is well known that ethylene (and α-olefins in general) can be readily polymerized at low or medium pressures in the presence of certain transition metal catalysts. These catalysts are generally known as Zeigler-Natta type catalysts.

A particular group of these Ziegler-Natta type catalysts, which catalyse the polymerization of ethylene (and α-olefins in general), comprise an aluminoxane activator and a metallocene transition metal catalyst. Metallocenes comprise a metal bound between two η⁵-cyclopentadienyl type ligands. Generally the η⁵-cyclopentadienyl type ligands are selected from η⁵-cyclopentadienyl, η⁵-indenyl and η⁵-fluorenyl.

It is also well known that these η⁵-cyclopentadienyl type ligands can be modified in a myriad of ways. One particular modification involves the introduction of a linking group between the two cyclopentadienyl rings to form ansa-metallocenes.

Numerous ansa-metallocenes of transition metals are known in the art. However, there remains a need for improved ansa-metallocene catalysts for use in polyolefin polymerization reactions. In particular, there remains a need for new metallocene catalysts with high polymerization activities/efficiencies.

There is also a need for catalysts that can produce polyethylenes with particular characteristics. For example, catalysts capable of producing linear high density polyethylene (LHDPE) with a relatively narrow dispersion in polymer chain length are desirable.

WO2011/051705 discloses *ansa*-metallocene catalysts based on two η⁵-indenyl ligands linked via an ethylene group.

There remains a need for *ansa*-metallocene catalysts having improved polymerization activity. It is even further desirable that such catalysts can be easily synthesized.

The present invention was devised with the foregoing in mind.

### SUMMARY OF THE INVENTION

According to a first aspect of the present invention there is provided a compound of formula (I) defined herein.

According to a second aspect of the present invention, there is provided a use of a compound of formula (I) defined herein as a polymerisation procatalyst in the preparation of a polyethylene homopolymer or a copolymer comprising polyethylene.

According to a third aspect of the present invention, there is provided a composition comprising a compound of formula (I) defined herein and a suitable activator as defined herein.

According to a fourth aspect of the present invention, there is provided a use of a composition as defined herein as a polymerisation catalyst for the preparation of a polyethylene homopolymer or a copolymer comprising polyethylene

According to a fifth aspect of the present invention, there is provided a process for forming a polyethylene homopolymer or a copolymer comprising polyethylene, the process comprising the step of reacting olefin monomers in the presence of (i) a compound of formula (I) defined herein, and (ii) a suitable activator as defined herein.

### DETAILED DESCRIPTION OF THE INVENTION

### Definitions

The term "alkyl" as used herein includes reference to a straight or branched chain alkyl moieties, typically having 1, 2, 3, 4, 5 or 6 carbon atoms. This term includes reference to groups such as methyl, ethyl, propyl (n-propyl or isopropyl), butyl (n-butyl, sec-butyl or tert-butyl), pentyl (including neopentyl), hexyl and the like. In particular, an alkyl may have 1, 2, 3 or 4 carbon atoms.

The term "alkenyl" as used herein include reference to straight or branched chain alkenyl moieties, typically having 2, 3, 4, 5 or 6 carbon atoms. The term includes reference to alkenyl moieties containing 1, 2 or 3 carbon-carbon double bonds (C=C). This term includes reference to groups such as ethenyl (vinyl), propenyl (allyl), butenyl, pentenyl and hexenyl, as well as both the *cis* and *trans* isomers thereof.

The term "alkynyl" as used herein include reference to straight or branched chain alkynyl moieties, typically having 2, 3, 4, 5 or 6 carbon atoms. The term includes reference to alkynyl moieties containing 1, 2 or 3 carbon-carbon triple bonds (C≡C). This term includes reference to groups such as ethynyl, propynyl, butynyl, pentynyl and hexynyl.

The term "alkoxy" as used herein include reference to -O-alkyl, wherein alkyl is straight or branched chain and comprises 1, 2, 3, 4, 5 or 6 carbon atoms. In one class of embodiments, alkoxy has 1, 2, 3 or 4 carbon atoms. This term includes reference to groups such as methoxy, ethoxy, propoxy, isopropoxy, butoxy, tert-butoxy, pentoxy, hexoxy and the like.

The term "aryl" as used herein includes reference to an aromatic ring system comprising 6, 7, 8, 9 or 10 ring carbon atoms. Aryl is often phenyl but may be a polycyclic ring system, having two or more rings, at least one of which is aromatic. This term includes reference to groups such as phenyl, naphthyl and the like.

The term "carbocyclyl" as used herein includes reference to an alicyclic moiety having 3, 4, 5, 6, 7 or 8 carbon atoms. The group may be a bridged or polycyclic ring system. More often cycloalkyl groups are monocyclic. This term includes reference to groups such as cyclopropyl, cyclobutyl, cyclopentyl, cyclohexyl, norbornyl, bicyclo[2.2.2]octyl and the like.

The term "heterocyclyl" as used herein includes reference to a saturated (e.g. heterocycloalkyl) or unsaturated (e.g. heteroaryl) heterocyclic ring moiety having from 3, 4, 5, 6, 7, 8, 9 or 10 ring atoms, at least one of which is selected from nitrogen, oxygen, phosphorus, silicon and sulphur. In particular, heterocyclyl includes a 3- to 10-membered ring or ring system and more particularly a 5- or 6-membered ring, which may be saturated or unsaturated.

A heterocyclic moiety is, for example, selected from oxiranyl, azirinyl, 1,2-oxathiolanyl, imidazolyl, thienyl, furyl, tetrahydrofuryl, pyranyl, thiopyranyl, thianthrenyl, iso-benzofuranyl, benzofuranyl, chromenyl, 2*H*-pyrrolyl, pyrrolyl, pyrrolinyl, pyrrolidinyl, imidazolyl, imidazolidinyl, benzimidazolyl, pyrazolyl, pyrazinyl, pyrazolidinyl, thiazolyl, isothiazolyl, dithiazolyl, oxazolyl, isoxazolyl, pyridyl, pyrazinyl, pyrimidinyl, piperidyl, piperazinyl, pyridazinyl, morpholinyl, thiomorpholinyl, especially thiomorpholino, indolizinyl, isoindolyl, 3*H*-indolyl, indolyl, benzimidazolyl, cumaryl, indazolyl, triazolyl, tetrazolyl, purinyl, 4*H*-quinolizinyl, isoquinolyl, quinolyl, tetrahydroquinolyl, tetrahydroisoquinolyl, decahydroquinolyl, octahydroisoquinolyl, benzofuranyl, dibenzofuranyl, benzothiophenyl, dibenzothiophenyl, phthalazinyl, naphthyridinyl, quinoxalyl, quinazolinyl, quinazolinyl, cinnolinyl, pteridinyl, carbazolyl, β-carbolinyl, phenanthridinyl, acridinyl, perimidinyl, phenanthrolinyl, furazanyl, phenazinyl, phenothiazinyl, phenoxazinyl, chromenyl, isochromanyl, chromanyl and the like.

The term "heteroaryl" as used herein includes reference to an aromatic heterocyclic ring system having 5, 6, 7, 8, 9 or 10 ring atoms, at least one of which is selected from nitrogen, oxygen and sulphur. The group may be a polycyclic ring system, having two or more rings, at least one of which is aromatic, but is more often monocyclic. This term includes reference to groups such as pyrimidinyl, furanyl, benzo[b]thiophenyl, thiophenyl, pyrrolyl, imidazolyl, pyrrolidinyl, pyridinyl, benzo[b]furanyl, pyrazinyl, purinyl, indolyl, benzimidazolyl, quinolinyl, phenothiazinyl, triazinyl, phthalazinyl, 2H-chromenyl, oxazolyl, isoxazolyl, thiazolyl, isoindolyl, indazolyl, purinyl, isoquinolinyl, quinazolinyl, pteridinyl and the like.

The term "halogen" or "halo" as used herein includes reference to F, Cl, Br or I. In a particular, halogen may be F or Cl, of which Cl is more common.

The term "substituted" as used herein in reference to a moiety means that one or more, especially up to 5, more especially 1, 2 or 3, of the hydrogen atoms in said moiety are replaced independently of each other by the corresponding number of the described substituents. The term "optionally substituted" as used herein means substituted or unsubstituted.

It will, of course, be understood that substituents are only at positions where they are chemically possible, the person skilled in the art being able to decide (either experimentally or theoretically) without inappropriate effort whether a particular substitution is possible. For example, amino or hydroxy groups with free hydrogen may be unstable if bound to carbon atoms with unsaturated (e.g. olefinic) bonds. Additionally, it will of course be understood that the substituents described herein may themselves be substituted by any substituent, subject to the aforementioned restriction to appropriate substitutions as recognised by the skilled person.

### Catalytic compounds

As discussed hereinbefore, the present invention provides a compound of the formula (I) shown below: 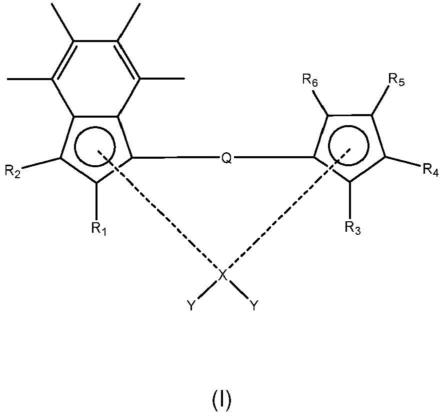 wherein:
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Q is a bridging group comprising 1, 2 or 3 bridging atoms selected from C, N, O, S, Ge, Sn, P, B, or Si, or a combination thereof, and is optionally substituted with one or more groups selected from hydroxyl, (1-6C)alkyl, (2-6C)alkenyl, (2-6C)alkynyl, (1-6C)alkoxy and aryl;
X is selected from zirconium, titanium or hafnium; and
each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, -C(O)NRₓR_{y}, (1-6C)alkoxy, or Si[(1-4C)alkyl]₃;
   wherein Rₓ and R_{y} are independently (1-4C)alkyl;
with the proviso that:
   i) when R₃ and R₄ are hydrogen or (1-4C)alkyl, R₅ and R₆ are not linked to form a fused 6-membered aromatic ring that is substituted with four methyl groups; and
   ii) when R₅ and R₆ are hydrogen or (1-4C)alkyl, R₃ and R₄ are not linked to form a fused 6-membered aromatic ring that is substituted with four methyl groups.

In an embodiment, the compound has a structure according to formula (I) wherein
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Q is a bridging group comprising 1, 2 or 3 bridging atoms selected from C, N, O, S, Ge, Sn, P, B, or Si, or a combination thereof, and is optionally substituted with one or more groups selected from hydroxyl, (1-6C)alkyl, (2-6C)alkenyl, (2-6C)alkynyl, (1-6C)alkoxy and aryl;
X is selected from zirconium, titanium or hafnium; and
   each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with halo, nitro, amino, phenyl, -C(O)NRₓR_{y}, (1-6C)alkoxy, or Si[(1-4C)alkyl]₃;
   wherein Rₓ and R_{y} are independently (1-4C)alkyl;
with the proviso that:
   i) when R₃ and R₄ are hydrogen or (1-4C)alkyl, R₅ and R₆ are not linked to form a fused 6-membered aromatic ring that is substituted with four methyl groups; and
   ii) when R₅ and R₆ are hydrogen or (1-4C)alkyl, R₃ and R₄ are not linked to form a fused 6-membered aromatic ring that is substituted with four methyl groups.

In another embodiment, the compound has a structure according to formula (I) wherein
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Q is a bridging group comprising 1, 2 or 3 bridging atoms selected from C, N, O, S, Ge, Sn, P, B, or Si, or a combination thereof, and is optionally substituted with one or more groups selected from hydroxyl, (1-6C)alkyl, (2-6C)alkenyl, (2-6C)alkynyl, (1-6C)alkoxy and aryl;
X is selected from zirconium, titanium or hafnium; and
at least one Y group is an aryloxy group which is optionally substituted with one or more groups selected from (1-6C)alkyl, and the other Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, -C(O)NRₓR_{y}, (1-6C)alkoxy, or Si[(1-4C)alkyl]₃;
   wherein Rₓ and R_{y} are independently (1-4C)alkyl;
with the proviso that:
   i) when R₃ and R₄ are hydrogen or (1-4C)alkyl, R₅ and R₆ are not linked to form a fused 6-membered aromatic ring that is substituted with four methyl groups; and
   ii) when R₅ and R₆ are hydrogen or (1-4C)alkyl, R₃ and R₄ are not linked to form a fused 6-membered aromatic ring that is substituted with four methyl groups.

Having regard to the proviso outlined above, it will be understood that the particular motifs not covered by the scope of the appended claims are as follows:

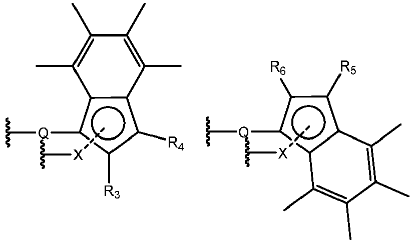

It will be appreciated that the structural formula (I) presented above is intended to show the substituent groups in a clear manner. A more representative illustration of the spatial arrangement of the groups is shown in the alternative representation below:

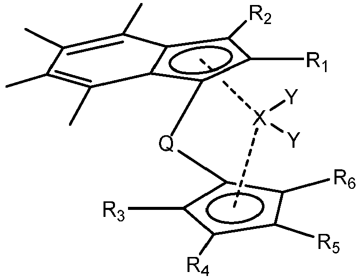

It will also be appreciated that when substituents R₃ and R₄ are not identical to substituents R₅ and R₆ respectively, the compounds of the present invention may be present as *meso* or *rac* isomers, and the present invention includes both such isomeric forms. A person skilled in the art will appreciate that a mixture of isomers of the compound of the present invention may be used for catalysis applications, or the isomers may be separated and used individually (using techniques well known in the art, such as, for example, fractional crystallization).

If the structure of a compound of formula (I) is such that *rac* and *meso* isomers do exist, the compound may be present in the *rac* form only, or in the *meso* form only.

The unsymmetrical catalytic compounds of the invention exhibit superior catalytic performance when compared with current metallocene compounds used in the polymerisation of α-olefins. In particular, when compared with current metallocene compounds used in the polymerisation of α-olefins, the compounds of the invention exhibit increased catalytic activity.

Suitably, when envisaged for use in the polymerisation of α-olefins, the compounds of the invention are immobilized on a suitable support as defined herein. The compounds of the invention may be immobilized directly on the support, or via a suitable linker. The compounds of the invention may be immobilized on the support by one or more ionic or covalent interactions.

In an embodiment, R₃ and R₄ are each independently hydrogen or (1-4C)alkyl, or R₃ and R₄ are linked such that, when taken in combination with the atoms to which they are attached, they form a fused 6-membered aromatic ring optionally substituted with one or more groups selected from (1-4C)alkyl, (2-4C)alkenyl, (2-4C)alkynyl, (1-4C)alkoxy, aryl, heteroaryl, carbocyclic and heterocyclic, wherein each aryl, heteroaryl, carbocyclic and heterocyclic group is optionally substituted with one or more groups selected from (1-4C)alkyl, (2-4C)alkenyl, (2-4C)alkynyl, (1-4C)alkoxy, halo, amino, nitro, cyano, (1-4C)alkylamino, [(1-4C)alkyl]₂amino and -S(O)₂(1-4C)alkyl; and

R₅ and R₆ are each independently hydrogen or (1-4C)alkyl, or R₅ and R₆ are linked such that, when taken in combination with the atoms to which they are attached, they form a fused 6-membered aromatic ring optionally substituted with one or more groups selected from (1-4C)alkyl, (2-4C)alkenyl, (2-4C)alkynyl, (1-4C)alkoxy, aryl, heteroaryl, carbocyclic and heterocyclic, wherein each aryl, heteroaryl, carbocyclic and heterocyclic group is optionally substituted with one or more groups selected from (1-4C)alkyl, (2-4C)alkenyl, (2-4C)alkynyl, (1-4C)alkoxy, halo, amino, nitro, cyano, (1-4C)alkylamino, [(1-4C)alkyl]₂amino and -S(O)₂(1-4C)alkyl.

In another embodiment, R₃ and R₄ are each independently hydrogen or (1-4C)alkyl, or R₃ and R₄ are linked such that, when taken in combination with the atoms to which they are attached, they form a fused 6-membered aromatic ring optionally substituted with one or more groups selected from (1-4C)alkyl, aryl, heteroaryl, carbocyclic and heterocyclic, wherein each aryl, heteroaryl, carbocyclic and heterocyclic group is optionally substituted with one or more groups selected from (1-4C)alkyl, (2-4C)alkenyl, (2-4C)alkynyl, (1-4C)alkoxy, halo, amino and nitro; and

R₅ and R₆ are each independently hydrogen or (1-4C)alkyl, or R₅ and R₆ are linked such that, when taken in combination with the atoms to which they are attached, they form a fused 6-membered aromatic ring optionally substituted with one or more groups selected from (1-4C)alkyl, aryl, heteroaryl, carbocyclic and heterocyclic, wherein each aryl, heteroaryl, carbocyclic and heterocyclic group is optionally substituted with one or more groups selected from (1-4C)alkyl, (2-4C)alkenyl, (2-4C)alkynyl, (1-4C)alkoxy, halo, amino and nitro.

In another embodiment, R₃ and R₄ are each independently hydrogen or (1-4C)alkyl, or R₃ and R₄ are linked such that, when taken in combination with the atoms to which they are attached, they form a fused 6-membered aromatic ring optionally substituted with one or more groups selected from (1-4C)alkyl, aryl and heteroaryl, wherein each aryl and heteroaryl group is optionally substituted with one or more groups selected from (1-4C)alkyl, (2-4C)alkenyl, (2-4C)alkynyl, (1-4C)alkoxy, halo, amino and nitro; and
R₅ and R₆ are each independently hydrogen or (1-4C)alkyl, or R₅ and R₆ are linked such that, when taken in combination with the atoms to which they are attached, they form a fused 6-membered aromatic ring optionally substituted with one or more groups selected from (1-4C)alkyl, aryl and heteroaryl, wherein each aryl and heteroaryl group is optionally substituted with one or more groups selected from (1-4C)alkyl, (2-4C)alkenyl, (2-4C)alkynyl, (1-4C)alkoxy, halo, amino and nitro.

In another embodiment, R₃ and R₄ are each independently hydrogen or (1-4C)alkyl, or R₃ and R₄ are linked such that, when taken in combination with the atoms to which they are attached, they form a fused 6-membered aromatic ring optionally substituted with one or more groups selected from (1-4C)alkyl and phenyl, wherein each phenyl group is optionally substituted with one or more groups selected from (1-4C)alkyl, (2-4C)alkenyl, (2-4C)alkynyl, (1-4C)alkoxy, halo, amino and nitro; and
R₅ and R₆ are each independently hydrogen or (1-4C)alkyl, or R₅ and R₆ are linked such that, when taken in combination with the atoms to which they are attached, they form a fused 6-membered aromatic ring optionally substituted with one or more groups selected from (1-4C)alkyl and phenyl, wherein each phenyl group is optionally substituted with one or more groups selected from (1-4C)alkyl, (2-4C)alkenyl, (2-4C)alkynyl, (1-4C)alkoxy, halo, amino and nitro.

In another embodiment:
i) when R₃ and R₄ are hydrogen or (1-4C)alkyl, and R₅ and R₆ are linked to form a fused 6-membered aromatic ring, said ring is optionally substituted with one or two substituents as defined herein; or
ii) when R₅ and R₆ are hydrogen or (1-4C)alkyl, and R₃ and R₄ are linked to form a fused 6-membered aromatic ring, said ring is optionally substituted with one or two substituents as defined herein.

In another embodiment, R₁ is methyl and R₂ is methyl or ethyl.

In another embodiment, Q is a bridging group comprising 1, 2 or 3 bridging atoms selected from C, B, or Si, or a combination thereof, and is optionally substituted with one or more groups selected from hydroxyl, (1-6C)alkyl, (2-6C)alkenyl, (2-6C)alkynyl, (1-6C)alkoxy and aryl;

In another embodiment, Q is a bridging group comprising 1, 2 or 3 bridging atoms selected from C, Si, or a combination thereof, and is optionally substituted with one or more groups selected from hydroxyl, (1-6C)alkyl, (2-6C)alkenyl, (2-6C)alkynyl, (1-6C)alkoxy and aryl.

In another embodiment, Q is a bridging group selected from -[C(Rₐ)(R_{b})-C(R_{c})(R_{d})]- and -[Si(Rₑ)(R_{f})]-, wherein Rₐ, R_{b}, R_{c}, R_{d}, Rₑ and R_{f} are independently selected from hydrogen, hydroxyl, (1-6C)alkyl, (2-6C)alkenyl, (2-6C)alkynyl, (1-6C)alkoxy and aryl. Suitably, Rₐ, R_{b}, R_{c} and R_{d} are each hydrogen, and Rₑ and R_{f} are each independently (1-6C)alkyl, (2-6C)alkenyl or phenyl. More suitably, Rₐ, R_{b}, R_{c} and R_{d} are each hydrogen, and Rₑ and R_{f} are each independently (1-4C)alkyl, (2-4C)alkenyl or phenyl.

In an embodiment, Q is a bridging group having the formula -[Si(Rₑ)(R_{f})]-, wherein Rₑ and R_{f} are each independently selected from methyl, ethyl, propyl, allyl or phenyl. Suitably, Q is a bridging group having the formula -[Si(Rₑ)(R_{f})]-, wherein Rₑ and R_{f} are each independently selected from methyl, ethyl, propyl and allyl. More suitably, Rₑ and R_{f} are each methyl.

In another embodiment, one Y group is a phenoxy group optionally substituted with 1, 2 or 3 groups independently selected from (1-3C)alkyl, and the other Y group is halo.

In another embodiment, each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, -C(O)NRₓR_{y}, (1-6C)alkoxy, or Si[(1-4C)alkyl]₃, wherein Rₓ and R_{y} are independently (1-4C)alkyl

In another embodiment, each Y is independently selected from halo or a (1-2C)alkyl or aryloxy group which is optionally substituted with one or more groups selected from (1-6C)alkyl, halo, phenyl, or Si[(1-4C)alkyl]₃. Suitably, each Y is halo.

In another embodiment, each Y is independently selected from halo or a (1-2C)alkyl group which is optionally substituted with halo, phenyl, or Si[(1-4C)alkyl]₃. More suitably, each Y is Cl.

In another embodiment, X is zirconium or hafnium. Suitably, X is zirconium.

In another embodiment, the compound has any of formulae (II), (III) or (IV) shown below: 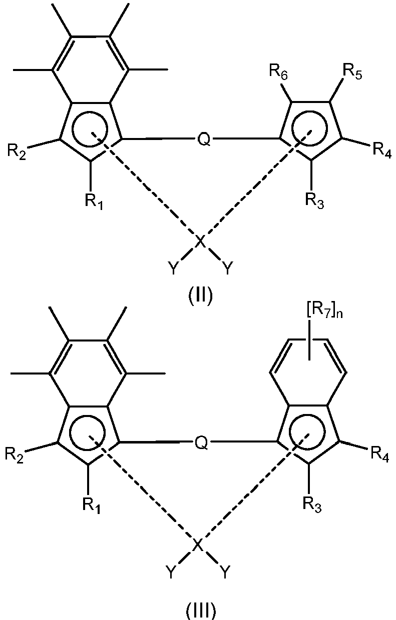 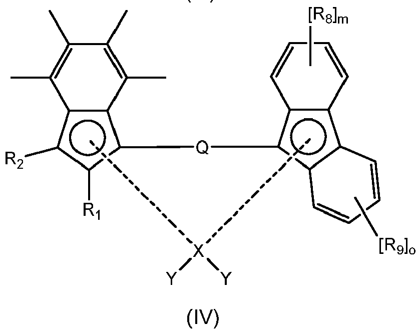 wherein:
R₁, R₂, R₃, R₄, R₅, R₆, Q, X and Y are each independently as defined in any of the paragraphs hereinbefore;
each R₇, R₈ and R₉ is independently selected from any of the ring substituents defined in any of the paragraphs hereinbefore (e.g. any of the substituents present on 6-membered aromatic rings formed when either or both of (i) R₃ and R4, and (ii) R₅ and R₆, are linked);
n, m and o are independently 0, 1, 2, 3 or 4.

Suitably, n, m and o are independently 0, 1, or 2. More suitably, n, m and o are independently 0, 1 or 2.

In another embodiment, in formulae (II), (III) or (IV), each R₇, R₈ and R₉ is independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro.

Suitably, in formulae (II), (III) or (IV), each R₇, R₈ and R₉ is independently selected from hydrogen, methyl, n-butyl, tert-butyl and unsubstituted phenyl.

In another embodiment, in formula (II), (III) or (IV), R₁ is methyl and R2 is methyl or ethyl.

In another embodiment, in formula (II), (III) or (IV), Q is a bridging group selected from -[C(Rₐ)(R_{b})-C(R_{c})(R_{d})]- and -[Si(Rₑ)(R_{f})]-, wherein Rₐ, R_{b}, R_{c}, R_{d}, Rₑ and R_{f} are independently selected from hydrogen, hydroxyl, (1-6C)alkyl, (2-6C)alkenyl, (2-6C)alkynyl, (1-6C)alkoxy and aryl. Suitably, Q is a bridging group -[Si(Rₑ)(R_{f})]-, wherein Rₑ and R_{f} are independently selected from hydrogen, hydroxyl and (1-6C)alkyl. More suitably, Q is a bridging group - [Si(Rₑ)(R_{f})]-, wherein Rₑ and R_{f} are independently selected from (1-6C)alkyl (e.g. methyl, ethyl, propyl or allyl).

In a particular embodiment, the compound has any of formulae (II), (III) or (IV), wherein
R₁ and R₂ are each independently (1-2C)alkyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
n, m and o are each independently 1 or 2;
Q is a bridging group selected from -[C(Rₐ)(R_{b})-C(R_{c})(R_{d})]- and -[Si(Rₑ)(R_{f})]-, wherein Rₐ, R_{b}, R_{c}, R_{d}, Rₑ and R_{f} are independently selected from hydrogen, hydroxyl, (1-6C)alkyl, (2-6C)alkenyl, (2-6C)alkynyl, (1-6C)alkoxy and aryl;
each Y is independently selected from halo or a (1-2C)alkyl group which is optionally substituted with halo, phenyl, or Si[(1-4C)alkyl]₃; and
X is zirconium or hafnium.

In another particular embodiment, the compound has any of formulae (II), (III) or (IV), wherein
R₁ and R₂ are each independently (1-2C)alkyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
n, m and o are each independently 1 or 2;
Q is a bridging group -[Si(Rₑ)(R_{f})]-, wherein Rₑ and R_{f} are independently selected from hydrogen, hydroxyl and (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another particular embodiment, the compound has any of formulae (II), (III) or (IV), wherein
R₁ is methyl and R₂ is methyl or ethyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
n, m and o are each independently 1 or 2;
Q is a bridging group -[Si(Rₑ)(R_{f})]-, wherein Rₑ and R_{f} are independently selected from hydrogen, hydroxyl and (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another particular embodiment, the compound has any of formulae (II), (III) or (IV), wherein
R₁ is methyl and R₂ is methyl or ethyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
n, m and o are each independently 1 or 2;
Q is a bridging group -[Si(Rₑ)(R_{f})]-, wherein Rₑ and R_{f} are independently selected from (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another embodiment, the compound has any of formulae (V), (VI) or (VII) shown below: 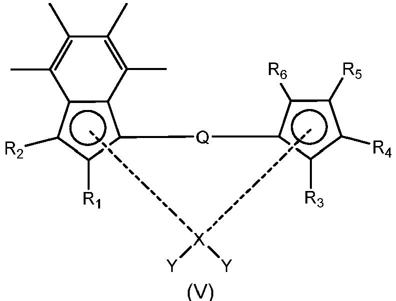 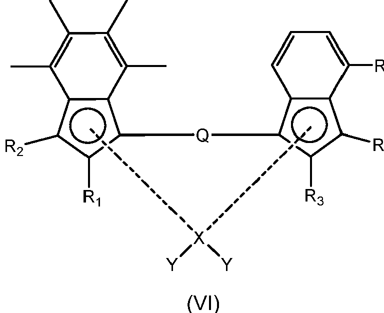 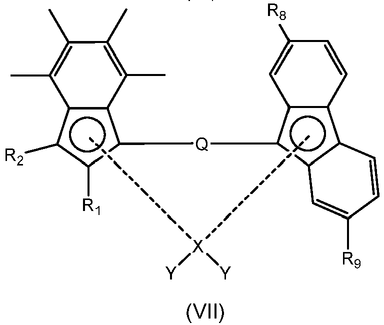 wherein
R₁, R₂, R₃, R₅, R₆, Q, X and Y are each independently as defined in any of the paragraphs hereinbefore;
R₇, R₈ and R₉ are each independently as defined in any of the paragraphs hereinbefore; and
R₄ is as defined in any of the paragraphs hereinbefore. Suitably, R₄ is hydrogen.

Suitably, each R₇, R₈ and R₉ in formulae (V), (VI) or (VII) is independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro.

Suitably, each R₇, R₈ and R₉ in formulae (V), (VI) or (VII) is independently selected from hydrogen, methyl, n-butyl, tert-butyl and unsubstituted phenyl.

In another embodiment, in formula (V), (VI) or (VII), Q is a bridging group selected from -[C(Rₐ)(R_{b})-C(R_{c})(R_{d})]- and -[Si(Rₑ)(R_{f})]-, wherein Rₐ, R_{b}, R_{c}, R_{d}, Rₑ and R_{f} are independently selected from hydrogen, hydroxyl, (1-6C)alkyl, (2-6C)alkenyl, (2-6C)alkynyl, (1-6C)alkoxy and aryl. Suitably, Q is a bridging group -[Si(Rₑ)(R_{f})]-, wherein Rₑ and R_{f} are independently selected from hydrogen, hydroxyl and (1-6C)alkyl. More suitably, Q is a bridging group -[Si(Rₑ)(R_{f})]-, wherein Rₑ and R_{f} are independently selected from (1-6C)alkyl (e.g. methyl, ethyl, propyl or allyl).

In another embodiment, in formula (V), (VI) or (VII), R₁ is methyl and R₂ is methyl or ethyl.

In a particular embodiment, the compound has any of formulae (V), (VI) or (VII), wherein
R₁ and R₂ are each independently (1-2C)alkyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
Q is a bridging group selected from -[C(Rₐ)(R_{b})-C(R_{c})(R_{d})]- and -[Si(Rₑ)(R_{f})]-, wherein Rₐ, R_{b}, R_{c}, R_{d}, Rₑ and R_{f} are independently selected from hydrogen, hydroxyl, (1-6C)alkyl, (2-6C)alkenyl, (2-6C)alkynyl, (1-6C)alkoxy and aryl;
each Y is independently selected from halo or a (1-2C)alkyl group which is optionally substituted with halo, phenyl, or Si[(1-4C)alkyl]₃; and
X is zirconium or hafnium.

In another particular embodiment, the compound has any of formulae (V), (VI) or (VII), wherein
R₁ and R₂ are each independently (1-2C)alkyl;
R₃, R₄, R₅ and R₆ are each independently hydrogen or (1-4C)alkyl;
R₇, R₈ and R₉ are each independently selected from hydrogen, methyl, n-butyl, tert-butyl and unsubstituted phenyl;
Q is a bridging group selected from -[C(Rₐ)(R_{b})-C(R_{c})(R_{d})]- and -[Si(Rₑ)(R_{f})]-, wherein Rₐ, R_{b}, R_{c} and R_{d} are each hydrogen, and Rₑ and R_{f} are each independently (1-6C)alkyl, (2-6C)alkenyl or phenyl;
each Y is independently selected from halo or a (1-2C)alkyl group which is optionally substituted with halo, phenyl, or Si[(1-4C)alkyl]₃; and
X is zirconium or hafnium.

In another particular embodiment, the compound has any of formulae (V), (VI) or (VII), wherein
R₁ and R₂ are each independently (1-2C)alkyl;
R₃, R₄, R₅ and R₆ are each independently hydrogen or (1-4C)alkyl;
R₇, R₈ and R₉ are each independently selected from hydrogen, methyl, n-butyl, tert-butyl and unsubstituted phenyl;
Q is a bridging group -[Si(Rₑ)(R_{f})]-, wherein Rₑ and R_{f} are independently selected from hydrogen, hydroxyl and (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another particular embodiment, the compound has any of formulae (V), (VI) or (VII), wherein
R₁ is methyl and R₂ is methyl or ethyl;
R₃, R₄, R₅ and R₆ are each independently hydrogen or (1-4C)alkyl;
R₇, R₈ and R₉ are each independently selected from hydrogen, methyl, n-butyl, tert-butyl and unsubstituted phenyl;
Q is a bridging group -[Si(Rₑ)(R_{f})]-, wherein Rₑ and R_{f} are independently selected from hydrogen, hydroxyl and (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another particular embodiment, the compound has any of formulae (V), (VI) or (VII), wherein
R₁ is methyl and R₂ is methyl or ethyl;
R₃, R₄, R₅ and R₆ are each independently hydrogen or (1-4C)alkyl;
R₇, R₈ and R₉ are each independently selected from hydrogen, (1-4C)alkyl and phenyl, said phenyl group being optionally substituted with one or more groups selected from (1-4C)alkyl, (2-4C)alkenyl, (2-4C)alkynyl, (1-4C)alkoxy, halo, amino and nitro;
n, m and o are each independently 1 or 2;
Q is a bridging group -[Si(Rₑ)(R_{f})]-, wherein Rₑ and R_{f} are independently selected from (1-6C)alkyl;
each Y is independently selected from halo, (1-2C)alkyl, or an aryloxy group which is optionally substituted with one or more substituents selected from (1-4C)alkyl, halo, phenyl, or Si[(1-4C)alkyl]₃; and
X is zirconium or hafnium.

In another embodiment, the compound of formula I has any one of the following structures

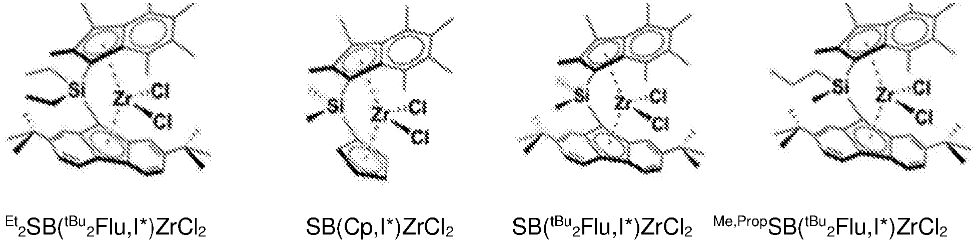

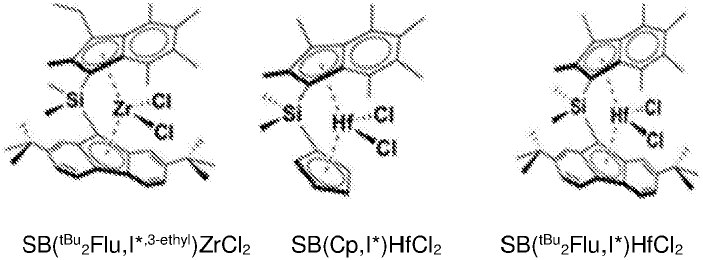

In another embodiment, the compound has a structure according to formula VIII shown below: 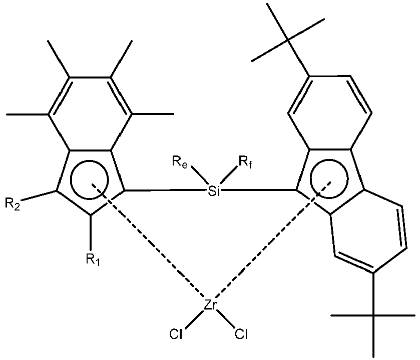 wherein
R₁ and R₂ are independently (1-2C)alkyl; and
Rₑ and R_{f} are independently (1-3C)alkyl.

In another embodiment, the compound has the following structure:

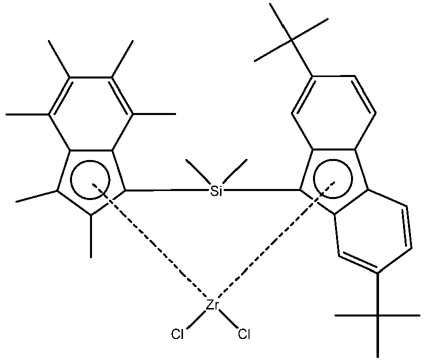

### Synthesis

The compounds of the present invention may be synthesised by any suitable process known in the art. Particular examples of processes for the preparing compounds of the present invention are set out in the accompanying examples.

Suitably, a compound of the present invention is prepared by:
(i) reacting a compound of formula A: 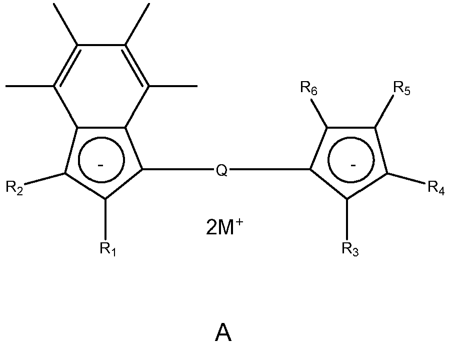 (wherein R₁, R₂, R₃, R₄, R₅, R₆ and Q are each as defined hereinbefore and M is Li, Na or K)
   with a compound of the formula B:

   X(Y')₄ B

   (wherein X is as defined hereinbefore and Y' is halo (particularly chloro or bromo)) in the presence of a suitable solvent to form a compound of formula (Ia): 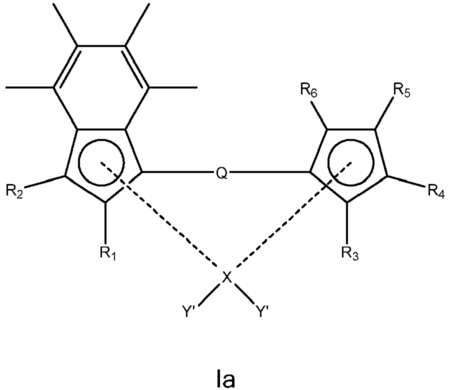 and optionally thereafter:
(ii) reacting the compound of formula Ia above with MY" (wherein M is as defined above and Y" is a group Y as defined herein other than halo), in the presence of a suitable solvent to form the compound of the formula (Ib) shown below

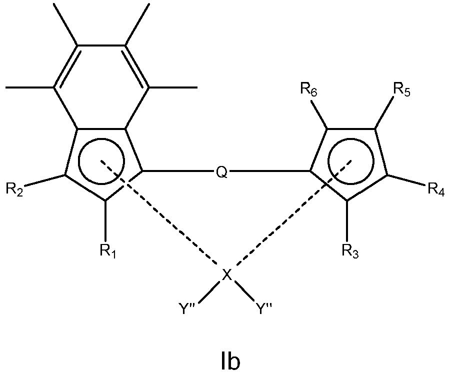

Suitably, M is Li in step (i) of the process defined above.

Suitably, the compound of formula B is provided as a solvate. In particular, the compound of formula B may be provided as X(Y')₄.THFₚ, where p is an integer (e.g. 2).

Any suitable solvent may be used for step (i) of the process defined above. A particularly suitable solvent is toluene or THF.

If a compound of formula (I) in which Y is other than halo is required, then the compound of formula (Ia) above may be further reacted in the manner defined in step (ii) to provide a compound of formula (lb).

Any suitable solvent may be used for step (ii) of the process defined above. A suitable solvent may be, for example, diethyl ether, toluene, THF, dicloromethane, chloroform, hexane DMF, benzene etc.

Compounds of formula A, in which Q is -[Si(Rₑ)(R_{f})]-, may generally be prepared by:
(i) Reacting a compound of formula D 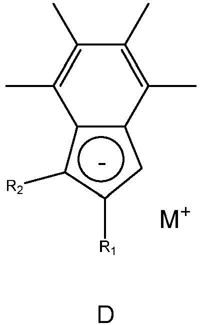 (wherein M is lithium, sodium, or potassium; and R₁ and R₂ are as defined hereinbefore) with one equivalent of a compound having formula E shown below:

   Si(Rₑ)(R_{f})(Cl)₂ E

   (wherein Rₑ and R_{f} are as defined hereinbefore)
   to form the compound of the formula F shown below: 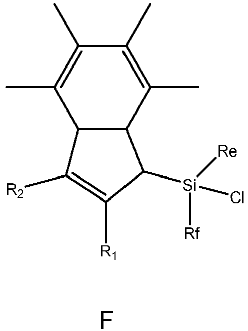
(ii) Reacting the compound of formula F with a compound of formula G shown below: 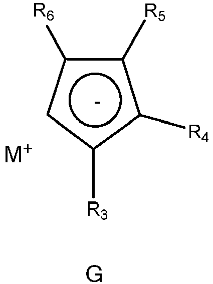 (wherein R₃, R₄, R₅ and R₆ are as defined hereinbefore, and M is lithium, sodium or potassium).

Compounds of formulae D and G can be readily synthesized by techniques well known in the art.

Any suitable solvent may be used for step (i) of the above process. A particularly suitable solvent is THF.

Similarly, any suitable solvent may be used for step (ii) of the above process. A suitable solvent may be, for example, toluene, THF, DMF etc.

A person of skill in the art will be able to select suitable reaction conditions (e.g. temperature, pressures, reaction times, agitation etc.) for such a synthesis.

Compounds of formula A, in which Q is -CH2-CH2-, may generally be prepared by:
(i) Reacting a compound of formula D 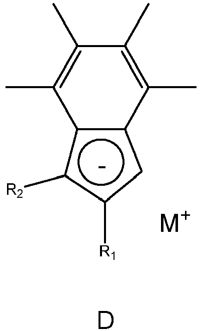 (wherein M is lithium, sodium, or potassium; and R₁ and R₂ are as defined hereinbefore) with an excess of BrCH2CH2Br to form a compound of the formula H shown below: 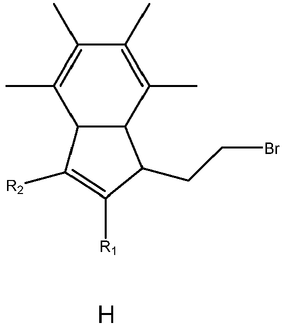 (wherein R₁ and R₂ are as defined hereinbefore); and
(ii) Reacting the compound of formula H with a compound of formula G shown below: 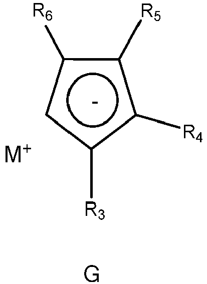 (wherein R₃, R₄, R₅ and R₆ are as defined hereinbefore, and M is lithium, sodium or potassium)

Compounds of formulae D and G can be readily synthesized by techniques well known in the art.

Any suitable solvent may be used for step (i) of the above process. A particularly suitable solvent is THF.

Similarly, any suitable solvent may be used for step (ii) of the above process. A suitable solvent may be, for example, toluene, THF, DMF etc.

A person of skill in the art will be able to select suitable reaction conditions (e.g. temperature, pressures, reaction times, agitation etc.) for such a synthesis.

### Applications

As previously indicated, the compounds of the present invention are extremely effective as catalysts in polyethylene polymerization reactions.

As discussed hereinbefore, the compounds of the invention exhibit superior catalytic performance when compared with current metallocene compounds used in the polymerisation of α-olefins. In particular, when compared with current metallocene compounds used in the polymerisation of α-olefins, the compounds of the invention exhibit significantly increased catalytic activity.

Thus, as discussed hereinbefore, the present invention also provides the use of a compound of formula I as defined herein as a polymerization catalyst, in particular in the preparation of polyethylene.

In one embodiment, the polyethylene is a homopolymer made from polymerized ethene monomers.

In another embodiment, the polyethylene is a copolymer made from polymerized ethene monomers comprising 1-10 wt% of (4-8C) α-olefin (by total weight of the monomers). Suitably, the (4-8C) α-olefin is 1-butene, 1-hexene, 1-octene, or a mixture thereof.

In another embodiment, the polyethylene is a polyethylene wax. Polyethylene wax will be understood by one of skill in the art as being low molecular weight polyethylene, typically having an average molecular weight of 1000-15,000 Da. Suitably, the polyethylene wax has an average molecular weight of 1000-6000 Da.

As discussed hereinbefore, the present invention also provides a composition comprising a compound of formula (I) defined herein and at least one suitable activator.

Suitable activators are well known in the art and include organo aluminium compounds (e.g. alkyl aluminium compounds). Particularly suitable activators include aluminoxanes (e.g. methylaluminoxane (MAO)), triisobutylaluminium (TIBA), diethylaluminium (DEAC) and triethylaluminium (TEA).

In another embodiment, the compound of formula (I) may be immobilized on a suitable support. Suitably, the support is insoluble under the polymerisation conditions. Examples of suitable supports include silicas, layered-double hydroxides (LDH, e.g. AMO-LDH MgAl-CO₃), and any other inorganic support material. Supports such as silica and AMO-LDH may be subjected to a heat treatment prior to use. An exemplary heat treatment involves heating the support to 400-600 °C (for silicas) or 100-150 °C (for AMO-LDHs) in a nitrogen atmosphere.

An exemplary layered double hydroxide is [Mg₁₋ₓAlₓ(OH)₂]^{x+}(A^{*n*-})_{*x*/*n*}.y(H₂O).w(solvent), in which 0.1 <x>0.9; A = anion eg. CO₃²⁻, OH-, F-, Cl⁻, Br⁻, I⁻, SO₄²⁻, NO₃⁻ and PO₄³⁻; w is a number less than 1; y is 0 or a number greater than 0 which gives compounds optionally hydrated with a stoichiometric amount or a non-stoichiometric amount of water and/or an aqueous-miscible organic solvent (AMO-solvent), such as acetone.

Suitably, the support is an activated support. The support may be activated by the presence of a suitable activator being covalently bound to the support. Suitably activators include organo aluminium compounds (e.g. alkyl aluminium compounds), in particular methyl aluminiumoxane. Examples of activated supports include methylaluminoxane activated silica and methylaluminoxane activated layered double hydroxide.

In another embodiment, the activated support may comprise an additional activator being an organo aluminium compound (e.g. alkyl aluminium compound). Suitably, the additional activator is triisobutylaluminium (TIBA)

As discussed hereinbefore, the present invention also provides a process for forming a polyolefin (e.g. a polyethylene) which comprises reacting olefin monomers in the presence of a compound of formula (I) as defined herein and a suitable activator as defined herein.

In one embodiment, the process for forming a polyolefin may be conducted in homogeneous solution.

In another embodiment, the process for forming a polyolefin comprises reacting olefin monomers in the presence of a compound of formula (I) as defined herein and a suitable activator, wherein the compound is immobilized on a suitable support, as defined herein. Suitably, the support is an activated support.

Suitably, the activated support is insoluble under the olefin polymerisation conditions, such that the process for forming a polyolefin proceeds via slurry polymerisation.

In another embodiment, the olefin monomers are ethene monomers.

In another embodiment, the olefin monomers are ethene monomers comprising 1-10 wt% of (4-8C) α-olefin (by total weight of the monomers). Suitably, the (4-8C) α-olefin is 1-butene, 1-hexene, 1-octene, or a mixture thereof.

In another embodiment, the polyolefin is a polyethylene wax, which is formed by reacting ethene monomers and H2 in the presence of a compound of formula (I) as defined herein and a suitable activator as defined herein. Optionally, quantities of 1-butene may be included together with the ethene monomers and H2.

A person skilled in the art of olefin polymerization will be able to select suitable reaction conditions (e.g. temperature, pressures, reaction times etc.) for such a polymerization reaction. A person skilled in the art will also be able to manipulate the process parameters in order to produce a polyolefin having particular properties.

In a particular embodiment, the polyolefin is polyethylene.

### EXAMPLES

Examples of the invention will now be described, for the purpose of reference and illustration only, with reference to the accompanying figures, in which:
Fig. 1 shows the ¹H NMR spectroscopy (chloroform-di, 298 K, 400 MHz) of pro-ligand [EB(^{tBu₂}Flu, I*) H₂].
Fig. 2 shows the ¹H NMR spectroscopy (chloroform-di, 298 K, 400 MHz) of pro-ligand [^{Me₂}Si(Ind*)Cl].
Fig. 3 shows the ¹H NMR spectroscopy (chloroform-di, 298 K, 400 MHz) of pro-ligand [^{iPr₂}Si(Ind*)Cl].
Fig. 4 shows the ¹H NMR spectroscopy (chloroform-di, 298 K, 400 MHz) of pro-ligand [^{Me,Propyl}Si(Ind*)Cl].
Fig. 5 shows the ¹H NMR spectroscopy (chloroform-di, 298 K, 400 MHz) of pro-ligand [SB(Flu, I*)H₂].
Fig. 6 shows the Molecular structure of [SB(^{tBu₂}Flu,I*)H₂], 50% ellipsoids, hydrogen atoms omitted for clarity; black: carbon, pink: silicon. Selected bond lengths (Å) and angle (°), Si-CH₃ 1.863(3), 1.868(3), Si-CH_{Flu}: 1.939(2), Si-CH_{Ind}: 1.926(2) and HC_{Flu}-Si-CH_{Ind}: 111.34(12).
Fig. 7 shows the ¹H NMR spectroscopy (chloroform-di, 298 K, 400 MHz) of [SB(^{tBu₂}Flu,I*)ZrCl₂].
Fig. 8 shows the ¹H NMR spectroscopy (chloroform-di, 298 K, 400 MHz) of [SB(^{tBu₂}Flu, I*)HfCl₂].
Fig. 9 shows the molecular structure of [SB(^{tBu₂}Flu,I*)ZrCl₂].
Fig. 10 shows the molecular structure of [SB(^{tBu₂}Flu,I*)HfCl₂].
Fig. 11 shows activity vs time for the polymerisation of ethylene using aluminoxane treated silica support: [SB(^{tBu₂}Flu,I*)ZrCl₂] (black square, dashed line) and [(SBI*)ZrCl₂] (grey circle, dotted line). Polymerisation conditions: 10 mg of catalyst, 50 mL hexanes, 2 bar, 70 °C and [TIBA]₀/[Zr]₀ = 1000.
Fig. 12 shows activity vs temperature for the polymerisation of ethylene using aluminoxane treated silica support (SSMAO):[SB(^{tBu₂}Flu,I*)ZrCl₂] (black square, dashed line) and [(SBI*)ZrCl₂] (grey circle, dotted line). Polymerisation conditions: 10 mg of catalyst, 50 mL hexanes, 2 bar, 1 h and [TIBA]₀/[Zr]₀ = 1000.
Fig. 13 shows activity vs temperature for the polymerisation of ethylene using aluminoxane treated layered double hydroxide (LDHMAO) supported/[SB(^{tBu₂}Flu,I*)ZrCl₂] (black square, full line). Polymerisation conditions: 10 mg of catalyst, 50 mL hexanes, 2 bar, 1 h and [TIBA]₀/[Zr]₀ = 1000.

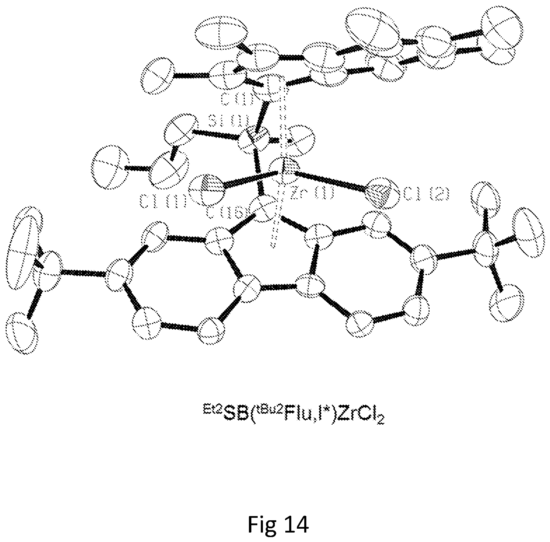

Fig. 14 shows the molecular structure of ^{Et2}SB(^{tBu₂}Flu,I*)ZrCl₂.

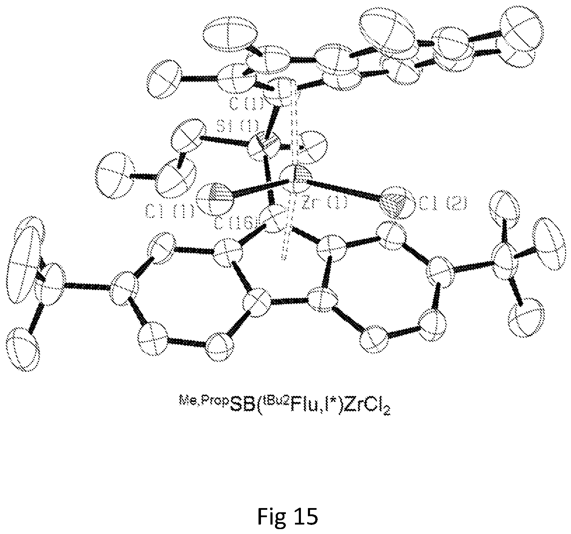

Fig. 15 shows the molecular structure of ^{Me,Prop}SB(^{tBu₂}Flu,I*)ZrCl₂.

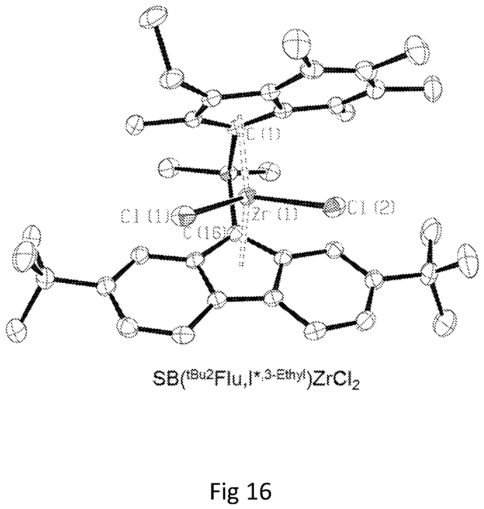

Fig. 16 shows the molecular structure of SB(^{tBu₂}Flu,I*^{,3-ethyl})ZrCl₂.

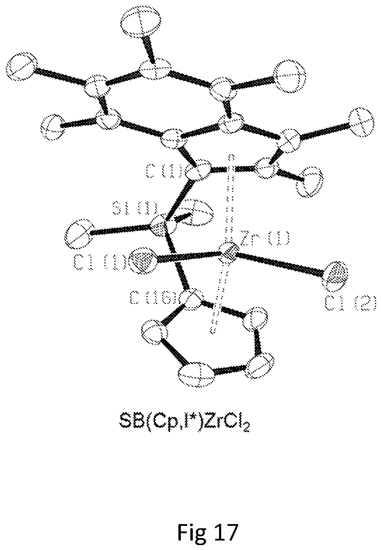

Fig. 17 shows the molecular structure of SB(Cp,I*)ZrCl₂.

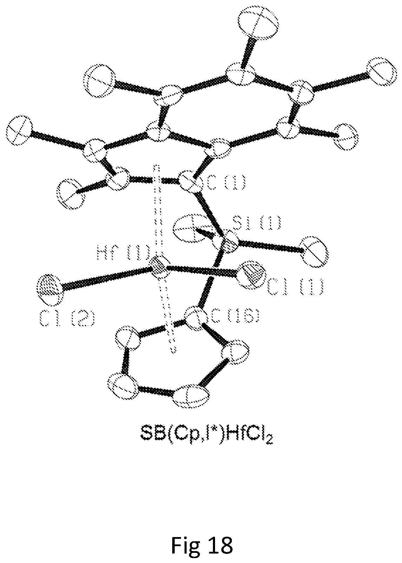

Fig. 18 shows the molecular structure of SB(Cp,I*)HfCl₂.

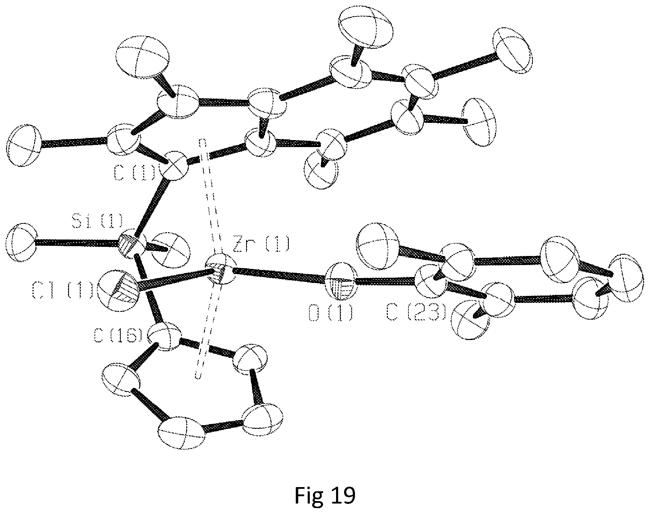

Fig. 19 shows the molecular structure of SB(Cp,I*)ZrCl(O-2,6-Me₂-C₆H₃).

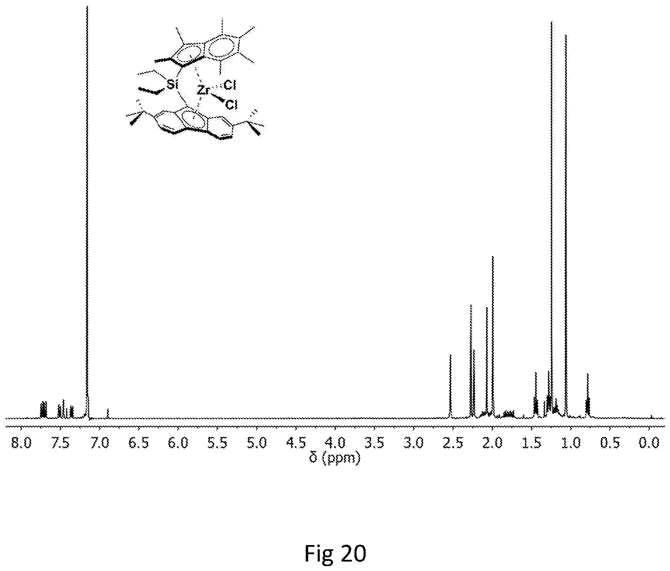

Fig. 20 shows the ¹H NMR spectrum (chloroform-*d*₁, 298 K, 400 MHz) of ^{Et2}SB(^{tBu₂}Flu,I*)ZrCl₂.

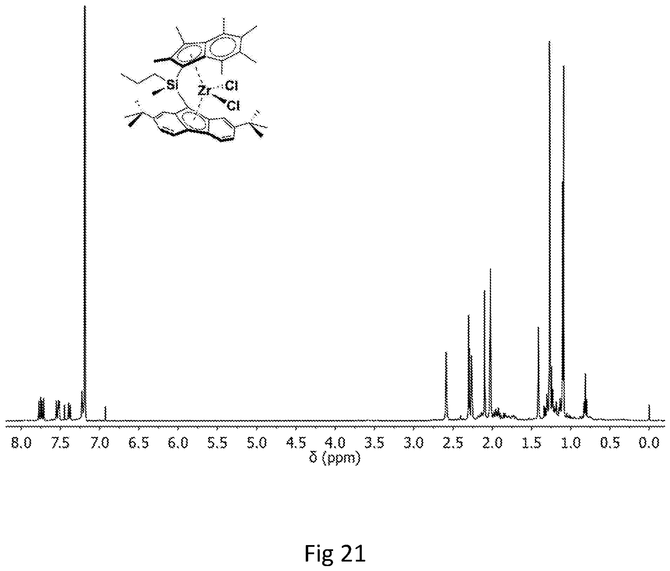

Fig. 21 shows the ¹H NMR spectrum (chloroform-*d*₁, 298 K, 400 MHz) of ^{Me,Prop}SB(^{tBu₂}Flu,I*)ZrCl₂.

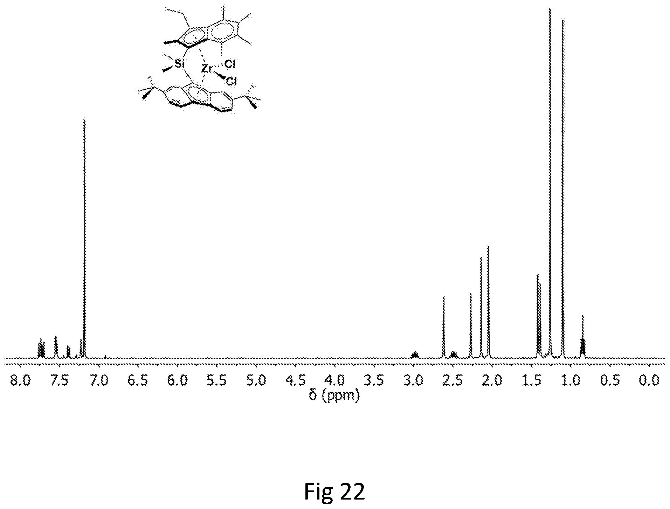

Fig. 22 shows the ¹H NMR spectrum (chloroform-*d*₁, 298 K, 400 MHz) of SB(^{tBu₂}Flu,I*^{,3-ethyl})ZrCl₂.

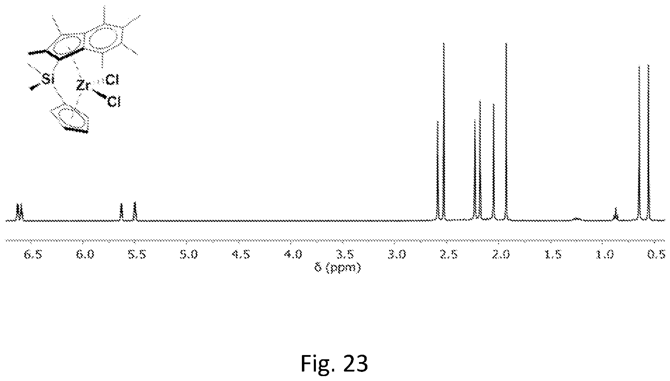

Fig. 23 shows the ¹H NMR spectrum (chloroform-*d*₁, 298 K, 400 MHz) of SB(Cp,I*)ZrCl₂.

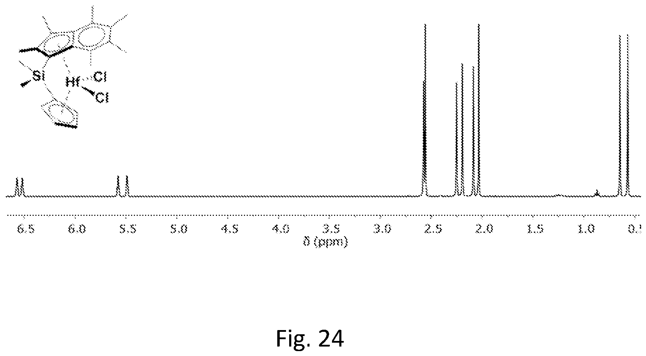

Fig. 24 shows the ¹H NMR spectrum (chloroform-*d*₁, 298 K, 400 MHz) of SB(Cp,I*)HfCl₂.

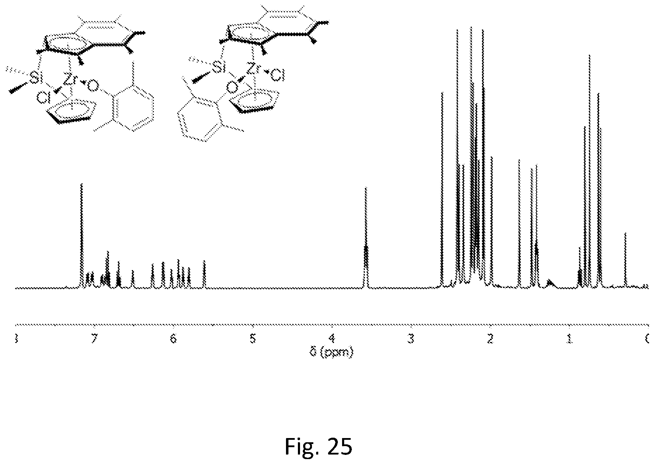

Fig. 25 shows the ¹H NMR spectrum (chloroform-*d*₁, 298 K, 400 MHz) of SB(Cp,I*)ZrCl(O-2,6-Me₂-C₆H₃).
Fig. 26 shows activity vs time of polymerisation of ethylene using aluminoxane treated layered double hydroxide supported/ SB(^{tBu₂}Flu,I*)ZrCl₂ (black square, full line).
Polymerisation conditions: 10 mg of catalyst, 50 mL hexanes, 2 bar, 1 h and [TIBA]₀/[Zr]₀ = 1000.
Fig. 27 shows activity vs temperature of polymerisation of ethylene using aluminoxane treated layered double hydroxide supported/ SB(^{tBu₂}Flu,I*)HfCl₂ (black circle, full line) and aluminoxane treated silica supported/ SB(^{tBu₂}Flu,I*)HfCl₂ (black square, full line).
Polymerisation conditions: 10 mg of catalyst, 50 mL hexanes, 2 bar, 1 h and [TIBA]₀/[Zr]₀ = 1000.
Fig. 28 shows activity vs time of polymerisation of ethylene using aluminoxane treated layered double hydroxide supported/ SB(^{tBu₂}Flu,I*)HfCl₂ (black circle, full line) and aluminoxane treated silica supported/ SB(^{tBu₂}Flu,I*)HfCl₂ (black square, full line).
Polymerisation conditions: 10 mg of catalyst, 50 mL hexanes, 2 bar, 1 h and [TIBA]₀/[Zr]₀ = 1000.
Fig. 29 shows activity vs temperature of polymerisation of ethylene using aluminoxane treated layered double hydroxide supported/ ^{Et2}SB(^{tBu₂}Flu,I*)ZrCl₂ (black square, full line).
Polymerisation conditions: 10 mg of catalyst, 50 mL hexanes, 2 bar, 1 h and [TIBA]₀/[Zr]₀ = 1000.

### Nomenclature

The nomenclature used herein will be readily understood by the skilled person having regard to the relevant structural formulae. Various abbreviations used throughout are expanded below:
**SB** means (Me)2Si-bridged. Similarly, ^{Et2}SB means (Et)₂Si-bridged
**EB** means ethylene-bridged
**Ind*** or **I*** means per-methyl indenyl
**Flu** means fluorenyl
**tBu** means tert-butyl
**Me** means methyl
**Pr** means propyl
**iPr** means isopropyl
**Ph** means phenyl

### General Methodology

All organometallic manipulations were performed under an atmosphere of N2 using standard Schlenk line techniques or a MBraun UNIlab glovebox, unless stated otherwise. All organic reactions were carried out under air unless stated otherwise. Solvents used were dried by either reflux over sodium-benzophenone diketyl (THF), or passage through activated alumina (hexane, Et₂O, toluene, CH₂Cl₂) using a MBraun SPS-800 solvent system. Solvents were stored in dried glass ampoules, and thoroughly degassed bypassage of a stream of N2 gas through the liquid and tested with a standard sodium-benzophenone-THF solution before use. Deuterated solvents for NMR spectroscopy of oxygen or moisture sensitive materials were treated as follows: C₆D₆ was freeze-pump-thaw degassed and dried over a K mirror; d⁵-pyridine and CDCl₃ were dried by reflux over calcium hydride and purified by trap-to-trap distillation; and CD₂Cl₂ was dried over 3 Å molecular sieves.

¹H and ¹³C NMR spectroscopy were performed using a Varian 300 MHz spectrometer and recorded at 300 K unless stated otherwise. ¹H and ¹³C NMR spectra were referenced via the residual protio solvent peak. Oxygen or moisture sensitive samples were prepared using dried and degassed solvents under an inert atmosphere in a glovebox, and were sealed in Wilmad 5mm 505-PS-7 tubes fitted with Young's type concentric stopcocks.

Mass spectra were using a Bruker FT-ICR-MS Apex III spectrometer.

For Single-crystal X-ray diffraction in each case, a typical crystal was mounted on a glass fibre using the oil drop technique, with perfluoropolyether oil and cooled rapidly to 150 K in a stream of N₂ using an Oxford Cryosystems Cryostream.¹ Diffraction data were measured using an Enraf-Nonius KappaCCD diffractometer (graphite-monochromated MoKa radiation, λ = 0.71073 Å). Series of ω-scans were generally performed to provide sufficient data in each case to a maximum resolution of 0.77 Å. Data collection and cell refinement were carried out using DENZO-SMN. ² Intensity data were processed and corrected for absorption effects by the multi-scan method, based on multiple scans of identical and Laue equivalent reflections using SCALEPACK (within DENZO-SMN). Structure solution was carried out with direct methods using the program Superflip³ within the CRYSTALS software suite. ⁴ In general, coordinates and anisotropic displacement parameters of all non-hydrogen atoms were refined freely except where this was not possible due to the presence of disorder. Hydrogen atoms were generally visible in the difference map and were treated in the usual manner⁵.

### Synthesis of Unsymmetrical Pro-ligands

### Synthesis of ethylene-bridged [EB(^{tBu2}Flu,I*)H₂]

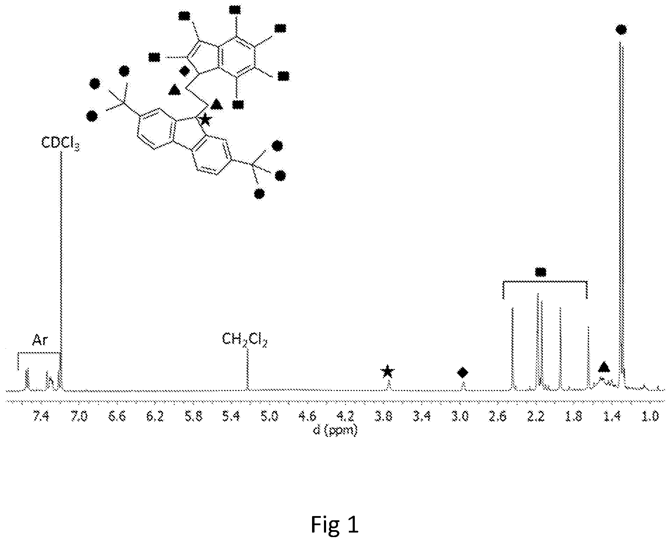

Having regard to Scheme 1 shown below, reaction of one equivalent of [(Ind^{#})H] with an excess of 1,2-dibromoethane afforded [(Ind*)CH₂CH₂Br] which was reacted with one equivalent of [(^{tBu₂}Flu)Li] to afford the new ethylene-bridged pro-ligand, [EB(^{tBu₂}Flu,I*)H₂], as a colourless solid in good yield. Figure 1 provides the ¹H NMR spectrum for EB(^{tBu₂}Flu,I*)H₂].

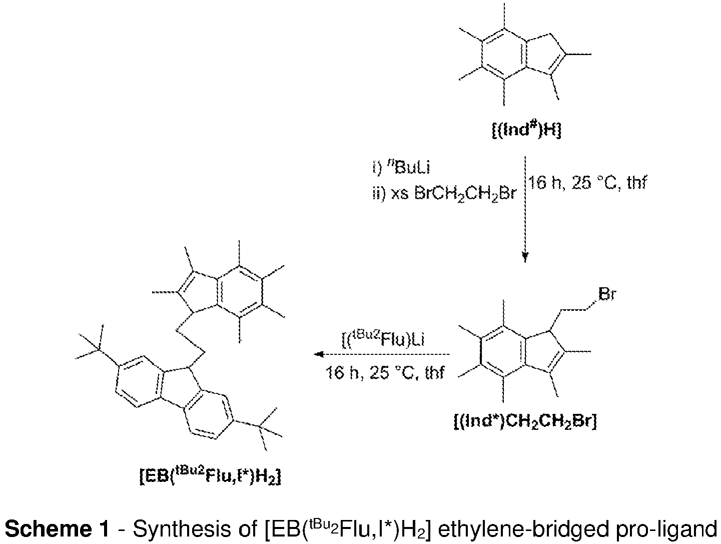

### Synthesis of silicon-bridged [SB(^{tBu₂}Flu,I*)H₂], [SB(Flu,I*)H₂] and [SB(^{Me,Ph} Ind,I*)H₂]

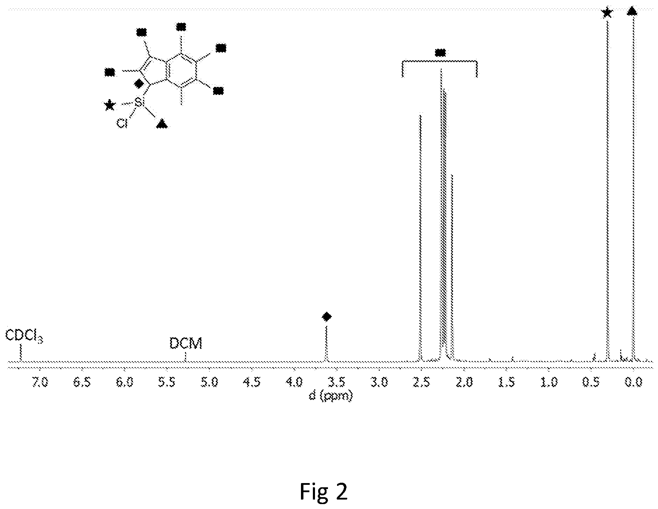

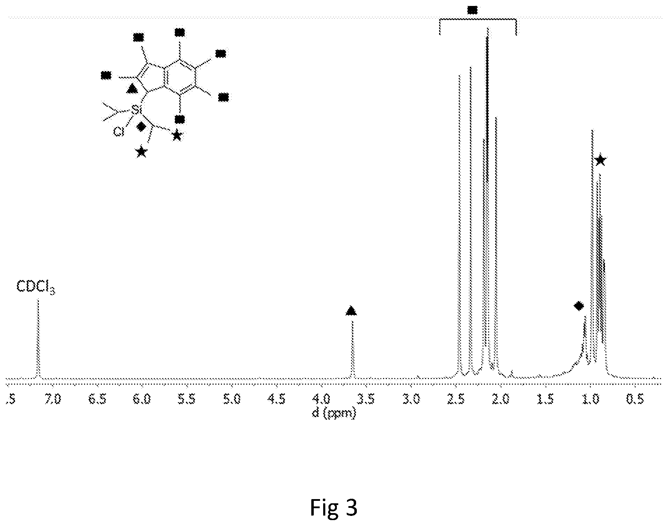

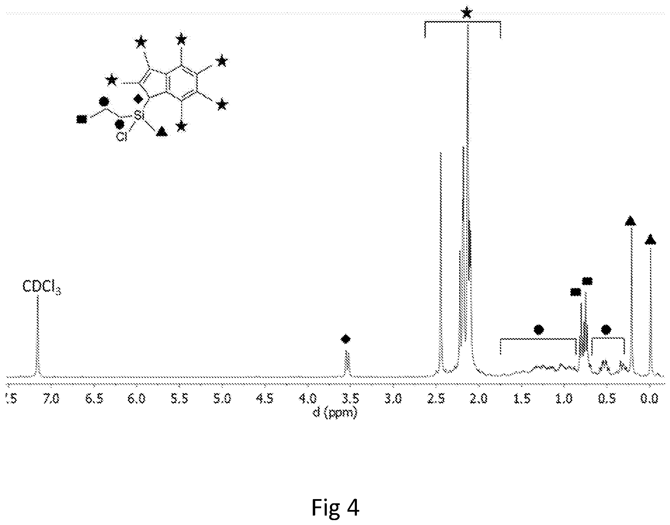

Having regard to Scheme 2 shown below, various silicon-bridged unsymmetrical pro-ligands were accessed using the silane synthon, [^{R,R'}Si(Ind*)Cl]. Figures 2, 3 and 4 show the ¹H NMR spectra for [^{Me₂}Si(Ind*)Cl], [^{iPr₂}Si(Ind*)Cl] and [^{Me,Pr}Si(Ind*)Cl] respectively.

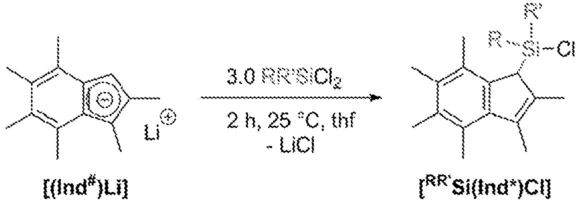

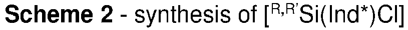

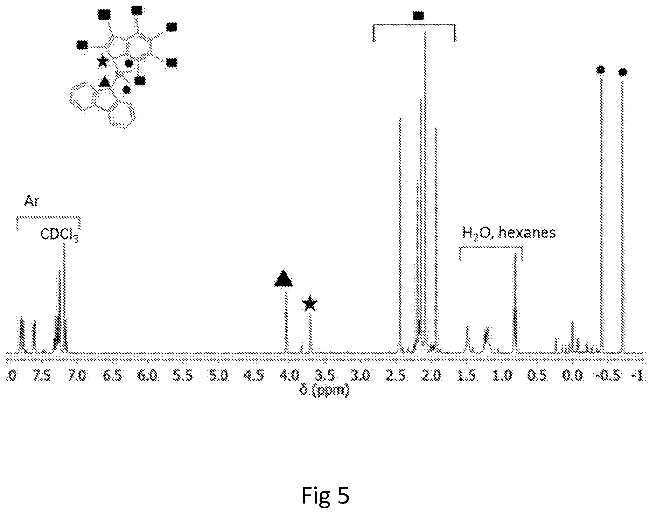

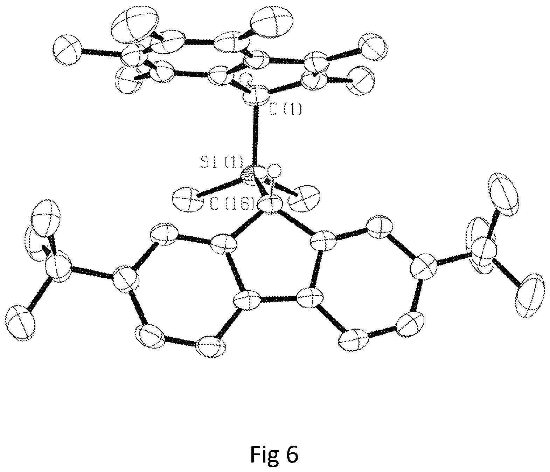

Having regard to Scheme 3 shown below, the synthesised silane synthon [^{Me₂}Si(Ind*)Cl] was separately reacted with one equivalent of [(^{tBu₂}Flu)Li], [(Flu)Li], and [(^{Me,Ph}Ind)Li] to afford the new Si-bridged pro-ligands [SB(^{tBu₂}Flu,I*)H₂], [SB(Flu,I*)H₂] and [SB(^{Me,Ph}Ind,I*)H₂] respectively as colourless solids in very good yields. Fig. 5 shows the ¹H NMR spectrum for [SB(Flu,I*)H₂]. Fig. 6 shows the X-ray crystallographic structure for [SB(^{tBu₂}Flu, I*) H₂].

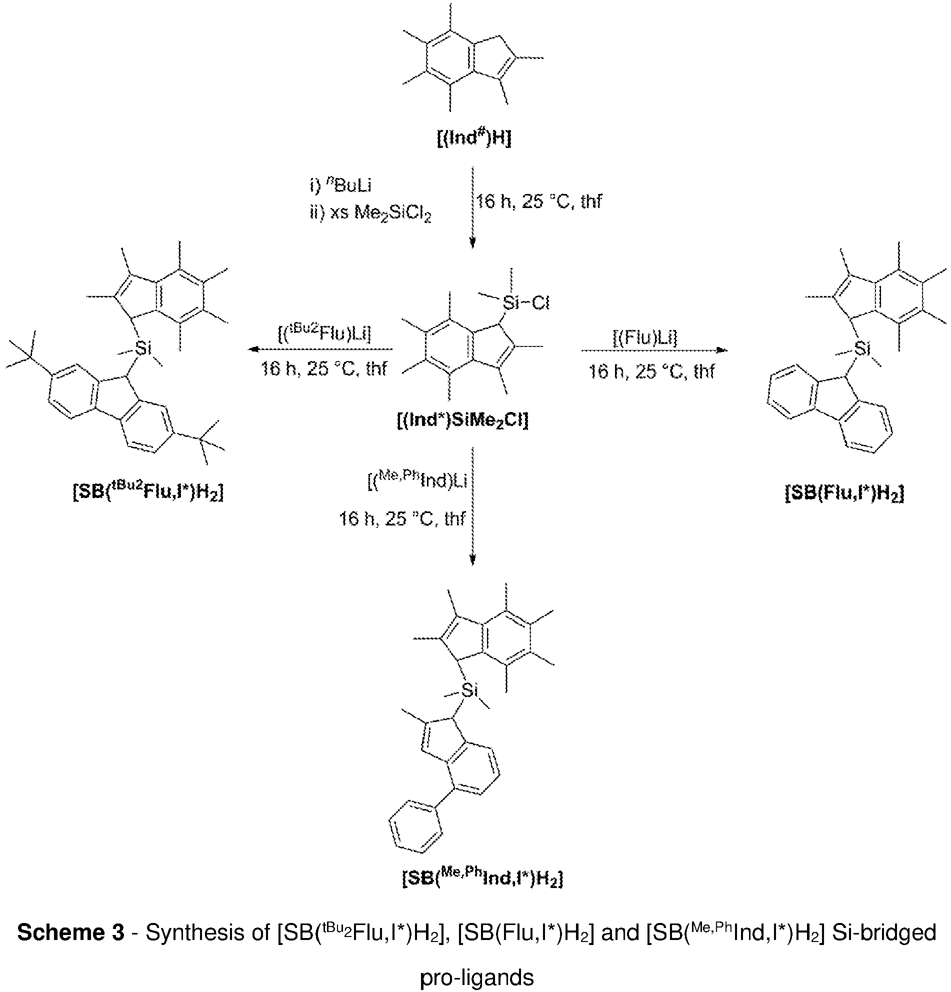

### Synthesis of unsymmetrical pro-catalysts

### Synthesis of [SB(^{tBu₂}Flu,I*)ZrCl₂] and [SB(^{tBu₂}Flu,I*)HfCl₂]

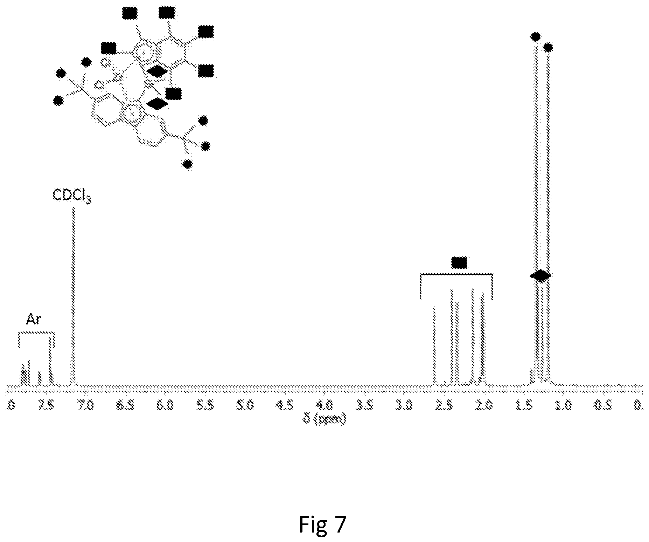

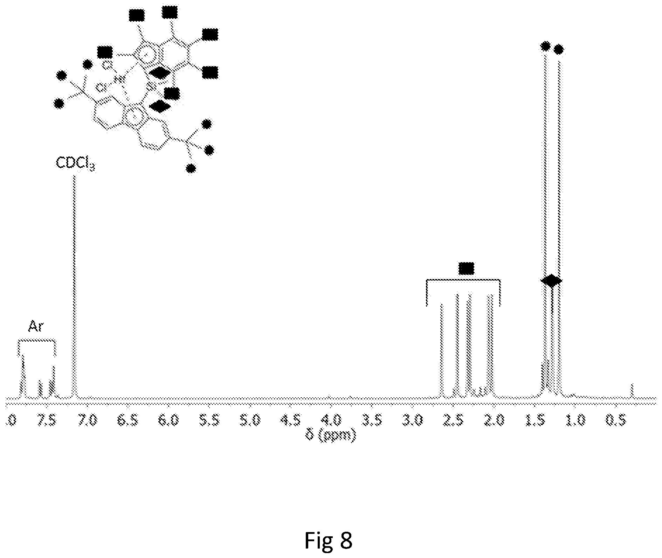

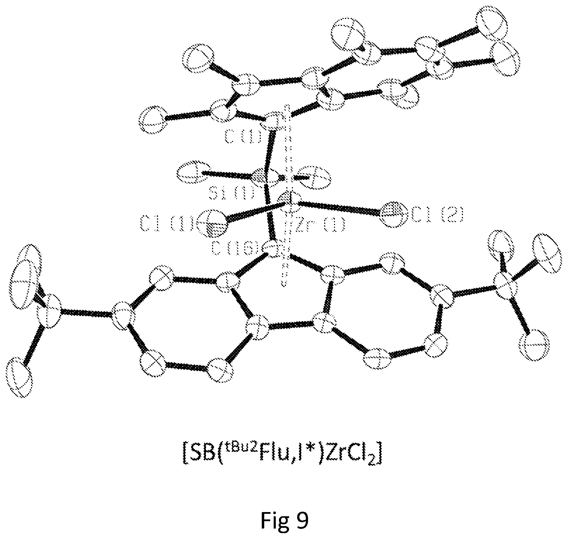

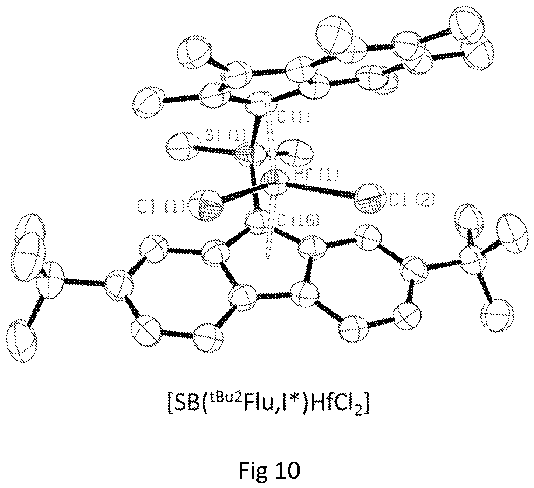

Having regard to Scheme 4 shown below, stoichiometric reactions of [SB(^{tBu₂}Flu,I*)Li₂] with MCl₄ (M = Zr and Hf) were carried out in benzene at room temperature overnight to afford [SB(^{tBu₂}Flu,I*)MCl₂] as bright orange solids in good yields. Figs. 7 and 8 show the ¹H NMR spectra of [SB(^{tBu₂}Flu,I*)ZrCl₂] and [SB(^{tBu2₂}Flu,I*)HfCl₂] respectively. Single crystals of [SB(^{tBu₂}Flu,I*)ZrCl₂] and [SB(^{tBu₂}Flu,I*)HfCl₂] suitable for X-ray crystallography were obtained by crystallisation in n-hexane solution at -30 °C. Figs. 9 and 10 show the X-ray crystallographic structures for [SB(^{tBu₂}Flu,I*)ZrCl₂] and [SB(^{tBu₂}Flu,I*)HfCl₂] respectively

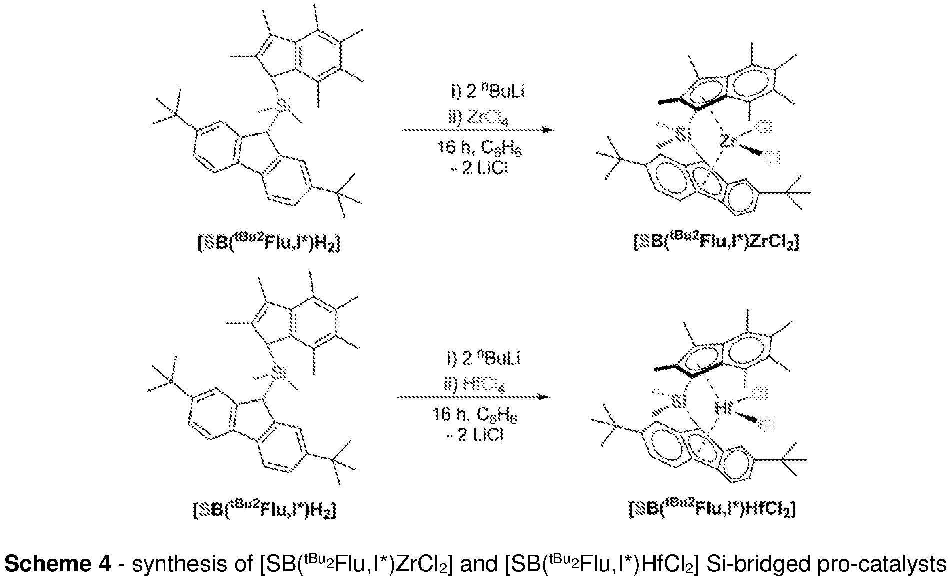

### Synthesis of ^{Et2}SB(^{tBu₂}Flu,I*)ZrCl₂ and ^{Me,Prop}SB(^{tBu₂}Flu, I*)ZrCl₂

Having regard to Scheme 5 outlined below, ^{Et₂}SB(^{tBu₂}Flu,I*)ZrCl₂ and ^{Me,Prop}SB(^{tBu₂}Flu,I*)ZrCl₂ Si-bridged Zr pro-catalysts were prepared in 18% and 41% yields respectively.

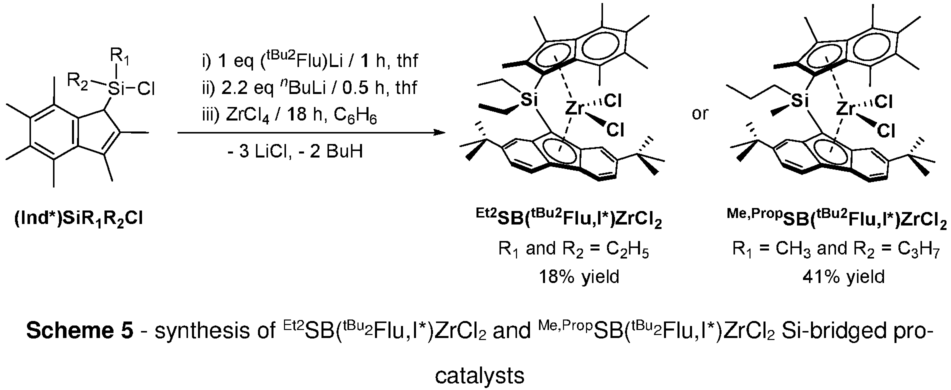

### Synthesis of SB(^{tBu₂}Flu,I*^{,3-Ethyl})ZrCl₂

Having regard to Scheme 6 outlined below, SB(^{tBu₂}Flu,I^{*,3-Ethyl})ZrCl₂ Si-bridged Zr pro-catalyst was prepared.

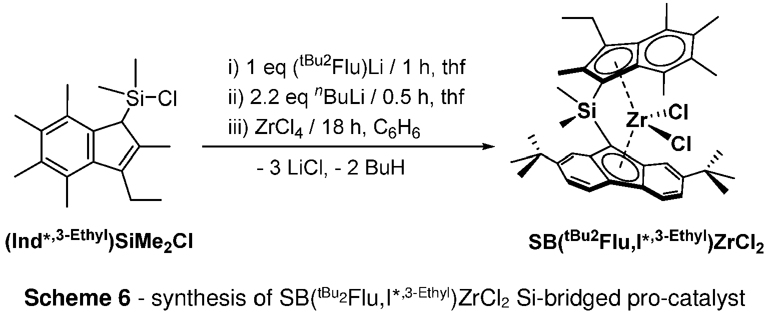

### Synthesis of SB(Cp,I*)ZrCl₂

Having regard to Scheme 7 below, toluene (40 ml) was added to a LiCp (246 mg, 3.41 mmol) and Ind*SiMe₂Cl (1 g, 3.41 mmol) were added to a Schlenk tube, dissolved in -5 °C THF (50 mL) and left to stir for two hours. *ⁿ*BuLi (4.7 mL, 1.6 M in hexanes, 7.51 mmol) was added, dropwise, over 30 minutes and the reaction left to stir for 12 hours. The solvent was removed *in vacuo* and the residue washed with pentane (3 x 40 mL) and dried to afford a grey powder. One equivalent of ZrCl₄ (796 mg, 3.41 mmol) was added and the mixture dissolved in benzene and left to stir for sixty hours. The solution changed colour from green, to orange and finally red/brown. The solvent was removed under vacuum and the product extracted with pentane (3 x 40 mL) and filtered through Celite. The filtrate was concentrated in vacuo and stored at -34 °C. This yielded **SB(Cp,I*)ZrCl₂** as an orange/brown precipitate in 23% yield (365 mg, 0.76 mmol). Orange crystals, suitable for single crystal X-ray diffraction, were grown from a concentrated solution in hexanes at -34 °C.
¹H NMR (*d₆*-benzene): δ 6.59 (2H, dm, CpH), 5.60 (2H, dm, CpH), 2.52 (3H, s, ArMe), 2.48 (3H, s, ArMe), 2.26 (3H, s, ArMe), 2.15 (3H, s, ArMe), 2.05 (3H, s, ArMe), 1.97 (3H, s, ArMe), 0.72 (3H, s, SiMe), 0.64 (3H, s, SiMe).
¹³C{¹H} NMR (*d₆*-benzene): δ 135.65 (Ar), 135.13 (Ar), 134.86 (Ar), 131.11 (Ar), 131.50 (Ar), 131.15 (Ar), 129.16 (Ar), 126.35 (Ar), 125.92 (ArSi), , 115.87 (CpH), 106.49 (CpH), 84.01 (CpSi), 21.69 (ArMe), 17.91 (ArMe), 17.64 (ArMe), 17.16 (ArMe), 16.92 (ArMe), 15.97 (ArMe), 5.59 (SiMe), 3.26 (SiMe).
MS (EI): Predicted: m/z 482.0372. Observed: m/z 482.0371.IR (KBr) (cm⁻¹): 2961, 2925, 1543, 1260, 1029, 809, 668.
CHN Analysis (%): Expected: C 54.74, H 5.85, Found: C 54.85, H 5.94.

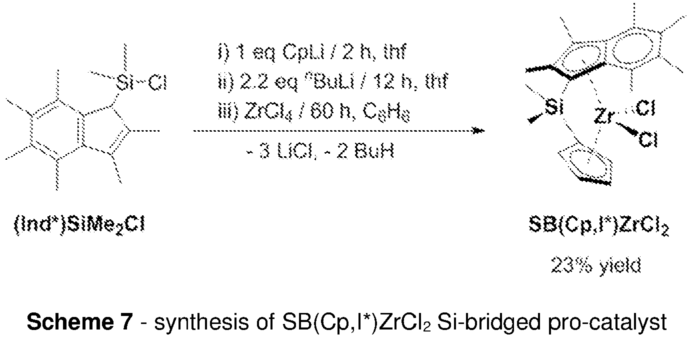

### Synthesis of SB(Cp,I*)HfCl₂

Having regard to Scheme 8 below, SB(Cp,I*)Li₂ (1 g, 2.99 mmol) and HfCl₄ (958 mg, 2.99 mmol) were added to a Schlenk tube. Benzene (100 mL) was added and the reaction was left to stir for 60 hours. The solution changed colour from brown to yellow. The solvent was the removed under vacuum and the product was extracted with pentane (3 x 40 mL) and filtered through Celite. The filtrate was concentrated *in vacuo* and stored at -34 °C yielding **SB(Cp,I*)HfCl₂** as yellow crystals, suitable for single crystal X-ray diffraction, in 24% yield (360 mg, 0.632 mmol).
¹H NMR (*d₆*-benzene): δ 6.54 (3H, dm, CpH), 5.53 (3H, dm, CpH), 2.57 (3H, s, ArMe), 2.56 (3H, s, ArMe), 2.25 (3H, s, ArMe), 2.20 (3H, s, ArMe), 2.09 (3H, s, ArMe), 2.03 (3H, s, ArMe), 0.65 (3H, s, SiMe), 0.57 (3H, s, SiMe).
¹³C{¹H} NMR (*d₆*-benzene): δ 134.55 (Ar), 134.18 (Ar), 133.51 (Ar), 131.73 (Ar), 131.05 (Ar), 129.64 (Ar), 126.23 (Ar), 125.18 (Ar), 124.38 (Ar), 113.33 (CₚH), 107.32 (CₚH), 82.33 (CₚSi), 21.53 (ArMe), 17.68 (ArMe), 17.37 (ArMe), 16.77 (ArMe), 16.64 (ArMe), 15.51 (ArMe), 5.00 (SiMe), 3.00 (SiMe).
MS (EI): Predicted: m/z 570.0785. Observed: m/z 570.0701. IR (KBr) (cm⁻¹): 2960, 2923, 1542, 1262, 1028, 812, 670.
CHN Analysis (%): Expected: C 46.36, H 4.95, Found: C 46.52, H 5.04.

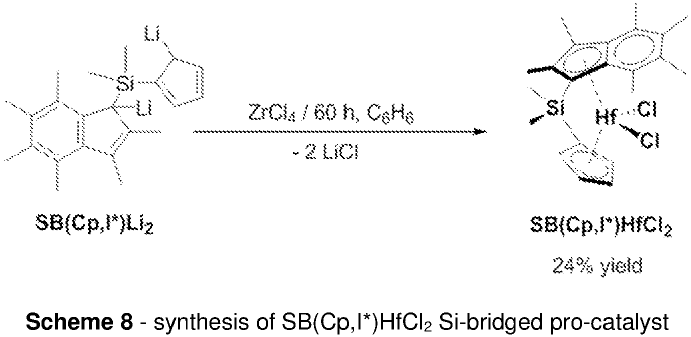

### Synthesis of SB(Cp,I*)ZrCl(O-Me₂-C₆H₃)

Having regard to Scheme 9 below, SB(Cp,I*)ZrCl₂ (100 mg, 0.207 mmol) and 2,6-dimethyl potassium phenoxide (66 mg, 0.414 mmol) were added to a Schlenk tube, dissolved in benzene (20 mL), and left to stir for sixteen hours. The solvent was removed *in vacuo* and the product extracted with pentane (2 x 20 mL). The ¹H NMR spectra showed resonances corresponding to a mixture of two isomers. Thin, yellow crystals of isomer (a), suitable for single crystal X-ray diffraction were obtained when the solution was concentrated and stored in a -34 °C freezer. Purity was 94% by ¹H NMR spectroscopy and crystals were obtained in 15% yield (16 mg, 0.028 mmol).

### Isomer (a):

¹H NMR (*d₆*-benzene): δ 7.06 (2H, dd, ArₚₕₑₙH), 6.82 (1H, t, ArₚₕₑₙH), 6.26 (1H, m, CpH), 6.13 (1H, m, CpH), 5.93 (1H, m, CpH), 5.61 (1H, m, CpH), 2.34 (3H, s, ArMe), 2.24 (3H, s, ArMe), 2.22 (6H, s, ArₚₕₑₙMe), 2.19 (3H, s ,ArMe), 2.18 (3H, s, ArMe), 2.15 (3H, s, ArMe), 1.99 (3H, s, ArMe), 0.81 (3H, s, SiMe), 0.75 (3H, s, SiMe).

### Isomer (b):

¹H NMR (*d₆*-benzene): δ 6.88 (2H, dd, ArₚₕₑₙH), 6.69 (1H, t, ArₚₕₑₙH), 6.51 (1H, m, CpH), 6.02 (1H, m, CpH), 5.88 (1H, m, CpH), 5.80 (1H, m, CpH), 2.61 (3H, s, ArMe), 2.42 (6H, s, ArₚₕₑₙMe), 2.40 (3H, s, ArMe), 2.08 (3H, s, ArMe), 1.99 (3H, s, ArMe), 1.64 (3H, s, ArMe), 1.48 (3H, s, ArMe), 0.64 (3H, s, SiMe), 0.61 (3H, s, SiMe).

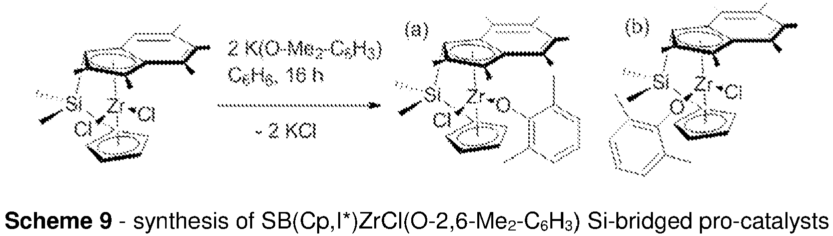

### Synthesis of Supported Catalyst Systems

### Synthesis of SSMAO/[SB(^{tBu₂}Flu,I*)ZrCl₂] catalyst system

Toluene (40 ml) was added to a Schlenk tube containing silica supported MAO, (SSMAO) (400 mg) and [SB(^{tBu₂}Flu,I*)ZrCl₂] (7.8 mg) at room temperature. The slurry was heated to 60 °C and left, with occasional swirling, for one hour during which time the solution turned colourless and the solid colourised dark red. The resulting suspension was then left to cool down to room temperature and the toluene solvent was carefully filtered and removed *in vacuo* to obtain SSMAO/ [SB(^{tBu₂}Flu,I*)ZrCl₂] catalyst as a peach, free-flowing powder. Yield: 353 mg.

### Synthesis of LDHMAO/[SB(^{tBu₂}Flu,I*)ZrCl₂] catalyst system

Toluene (40 ml) was added to a Schlenk tube containing layered double hydroxide supported MAO (LDHMAO) (400 mg) and [SB(^{tBu₂}Flu,I*)ZrCl₂] (7.2 mg) at room temperature. The slurry was heated to 60 °C and left, with occasional swirling, for one hour during which time the solution turned colourless and the solid colourised brown. The resulting suspension was then left to cool down to room temperature and the toluene solvent was carefully filtered and removed *in vacuo* to obtain LDHMAO/ [SB(^{tBu₂}Flu,I*)ZrCl₂] catalyst as an off-white, free-flowing powder. Yield: 292 mg.

### Ethylene Polymerisation Studies

### Homogeneous solution polymerisation

Unsymmetrical [SB(^{tBu₂}Flu,I*)ZrCl₂], and [SB(^{tBu₂}FluI*)HfCl₂]) complexes were tested for their ethylene polymerisation activity against the symmetrical comparator compound *rac-*[(SBI*)ZrCl₂] under solution conditions in the presence of tri(isobutyl)aluminium (TIBA) and methylaluminoxane, an aluminium-based scavenger. The reactions were performed under 2 bar of ethylene in a 200 mL ampoule, with around 1 mg of the complex in 50 mL of hexane. The reactions were run for a certain time at 70 °C controlled by heating in an oil bath. The resulting polyethylene was immediately filtered under vacuum through a dry sintered glass frit. The polyethylene product was then washed with pentane (2 × 25 ml) and then dried on the frit for at least one hour.

Table 1a shown below compares the activity of [SB(^{tBu₂}Flu,I*)ZrCl₂], and [SB(^{tBu₂}Flu,I*)HfCl₂]) in homogeneous solution ethylene polymerisation with various symmetrical prior art complexes.

**Table 1a. Activity results (kg_{PE}/mol_{complex}/h/bar) for the polymerisation of ethylene in homogeneous solution**

| **Complex** | *T* (°C) | *P* (bar) | [Al_{scavenger}]/[Zr]^{a} | Al^{b} | V (mL)^{c} | n (µmol)^{d} | Activity kg_{PE}/mol_{complex}/h/bar |
|---|---|---|---|---|---|---|---|
| **[SB(^{tBu₂}Flu,I*)ZrCl₂]** | 70 | 2 | 2000 | MAO | 50 | 2.88 | **35056** |
| **[SB(^{tBu₂}Flu,I*)HfCl₂]** | 70 | 2 | 2000 | MAO | 50 | 0.89 | **9376** |
| *rac-*[(SBI*)ZrCl₂] | 70 | 2 | 2000 | MAO | 50 | 4.70 | 4578 |
| *rac*-[(EBI*)ZrCl₂]† | 70 | 10 | 10000 | MMAO | 1800 | 2.90 | 42664 |
| *meso*-[(EBI*)ZrCl₂]† | 70 | 10 | 10000 | MMAO | 1800 | 2.90 | 26371 |
| *rac*-[(EBI*)HfCl₂]† | 70 | 10 | 10000 | MMAO | 1800 | 2.00 | 1248 |

| | | | | | | | |
|---|---|---|---|---|---|---|---|
| † Values obtained from *Organometallics* **2011**, *30,* 800 ^{a}molar ratio of MAO or MMAO and zirconium complex *e.g.* [MAO]₀/[[EBI*ZrCl₂]₀. ^{b}aluminium scavenger used (MAO or MMAO). ^{c}volume of solvent, 50 mL of hexane or 1800 mL of isobutene. ^{d}number of mol of the complex used. | | | | | | | |

Having regard to the data presented in Table 1a, unsymmetrical complex [SB(^{tBu₂}Flu,I*)ZrCl₂] is seen to be 7.6 times faster than the similar symmetrical zirconium complex *rac*-[(SBI*)ZrCl₂] in the same conditions (35056 vs. 4578 kg_{PE}/mol_{complex}/h/bar respectively). Unsymmetrical complex [SB(^{tBu₂}Flu,I*)HfCl₂] is 7.5 times faster than the symmetrical hafnium complex *rac*-[(EBI*)HfCl₂] (9377 vs. 1248 kg_{PE}/mol_{complex}/h/bar respectively), even when the data for the unsymmetrical complexes were obtained in far less solvent volume and amount of scavenger. Unsymmetrical complex [SB(^{tBu₂}Flu,I*)ZrCl₂] is 1.3 times faster than *meso*-[(EBI*)ZrCl₂] (42664 vs. 26371 kg_{PE}/mol_{complex}/h/bar respectively), even when the data for the unsymmetrical complexes were obtained in far less solvent volume and amount of scavenger.

Table 1b shown below compares the activity of various compounds of the invention as catalysts for the homogeneous solution phase polymerisation of ethylene.

**Table 1b. Activity results (kg_{PE}/mol_{complex}/h/bar) for the polymerisation of ethylene in homogeneous solution**

| **Complex** | *T* (°C ) | *P* (bar ) | [MAO ] /[Zr]^{a} | Time (minutes ) | V (mL) b | n (µmol) c | Activity kg _{PE}/MOl_{complex}/h/ba r |
|---|---|---|---|---|---|---|---|
| ^{Et2}SB(^{tBu₂}Flu,I^{*})ZrCl₂ | 70 | 2 | 2000 | 1 | 50 | 0.69 | **26681** |
| ^{Et2}SB(^{tBu₂}Flu,I*)ZrCl₂ | 70 | 2 | 2000 | 0.5 | 50 | 0.69 | **32712** |
| ^{Et2}SB(^{tBu₂}Flu,I*)ZrCl₂ | 60 | 2 | 2000 | 1 | 50 | 0.69 | **20044** |
| ^{Et2}SB(^{tBu₂}Flu,I*)ZrCl₂ | 80 | 2 | 2000 | 1 | 50 | 0.69 | **20521** |
| ^{Me,prop}SB(^{tBu₂}Flu,I*)ZrCl ₂ | 70 | 2 | 2000 | 1 | 50 | 0.69 | **17267** |
| ^{Me,prop}SB(^{tBu₂}Flu,I*)ZrCl ₂ | 70 | 2 | 2000 | 0.5 | 50 | 0.69 | **32538** |
| ^{Me,Prop}SB(^{tBu₂}Flu,I*)ZrCl ₂ | 60 | 2 | 2000 | 1 | 50 | 0.69 | **21041** |
| SB(^{tBu₂}Flu,I^{*,3-ethyl})ZrCl₂ | 70 | 2 | 2000 | 1 | 50 | 0.71 | **18676** |
| SB(^{tBu₂}Flu,I^{*,3-elhyl})ZrCl₂ | 80 | 2 | 2000 | 1 | 50 | 0.71 | **18846** |
| SB(^{tBu₂}Flu,I^{*,3-elhyl})ZrCl₂ | 60 | 2 | 2000 | 1 | 50 | 0.71 | **17570** |
| SB(^{tBu₂}Flu, I^{*,3-ethyl})ZrCl₂ | 70 | 2 | 2000 | 0.5 | 50 | 0.71 | **26717** |
| SB(Cp,I*)ZrCl₂ | 50 | 2 | 1000 | 5 | 50 | 1.04 | **5410** |
| SB(Cp,I*)ZrCl₂ | 60 | 2 | 1000 | 5 | 50 | 1.04 | **5482** |
| SB(Cp,I*)ZrCl₂ | 70 | 2 | 1000 | 5 | 50 | 1.04 | **4807** |
| SB(Cp,I*)ZrCl₂ | 80 | 2 | 1000 | 5 | 50 | 1.04 | **4709** |
| SB(Cp,I*)HfCl₂ | 80 | 2 | 1000 | 5 | 50 | 1.04 | **3055** |

| | | | | | | | |
|---|---|---|---|---|---|---|---|
| ^{a}molar ratio of MAO and zirconium complex. ^{b}volume of solvent (hexanes). ^{c}number of mol of the complex used. | | | | | | | |

From the data presented in Table 1b, it is clear that all complexes based on tert-butyl fluorine demonstrated extremely high activity (all above 17000 kg_{PE}/mol_{complex}/h/bar) for polymerisation ran for 1 minute or 30 seconds. The zirconium cyclopentadienyl compounds gave high activity for polymerisation carried out for 5 minutes (all above 4700 kg_{PE}/mol_{complex}/h/bar).

### Slurry polymerisation

SSMAO/[SB(^{tBu₂}Flu,I*)ZrCl₂], and LDHMAO/[SB(^{tBu₂}Flu,I*)ZrCl₂]) supported catalyst systems were tested for their ethylene polymerisation activity under slurry conditions in the presence of tri(isobutyl)aluminium (TIBA), an aluminium-based scavenger. The reactions were performed under 2 bar of ethylene in a 200 mL ampoule, with 10 mg of the catalyst suspended in 50 mL of hexane. The reactions were run for 60 minutes at a temperature controlled by heating in an oil bath. The resulting polyethylene was immediately filtered under vacuum through a dry sintered glass frit. The polyethylene product was then washed with pentane (2 × 25 ml) and then dried on the frit for at least one hour. The tests were carried out at least twice for each individual set of polymerisation conditions.

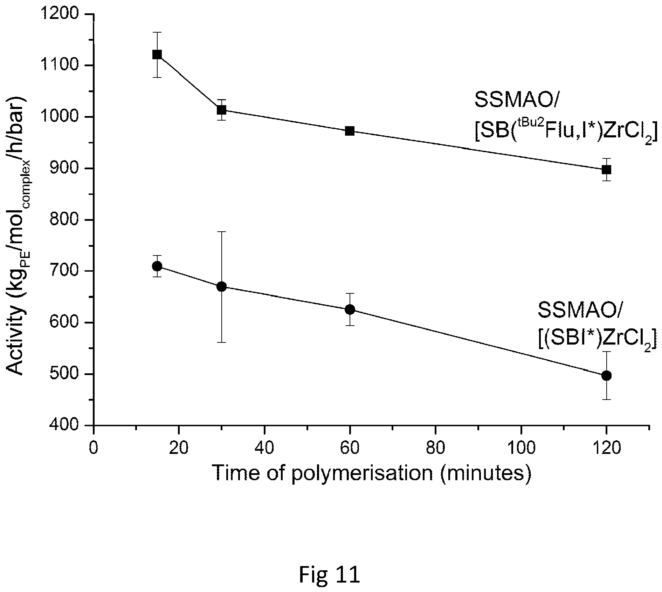

Table 2 shown below and Fig. 11 provide activity results (kg_{PE}/mol_{complex}/h/bar) vs time for the slurry polymerisation of ethylene using SSMAO/[complex]. Polymerisation conditions: 10 mg catalyst, 50 mL hexanes, 2 bar, 70 °C and [TIBA]₀/[Zr]₀ = 1000.

**Table 2 - Activity results (kg_{PE}/mol_{complex}/h/bar) for the slurry polymerisation of ethylene using SSMAO/[complex]**

| **Complex** | Time (minutes) | | | |
|---|---|---|---|---|
| | 15 | 30 | 60 | 120 |
| **[SB(^{tBu₂}Flu,I*)ZrCl₂]** | 1121±44 | 1014±20 | 973±4 | 898±22 |
| **[(*rac-*SBI*)ZrCl₂]** | 709±21 | 669±108 | 625±31 | 497±47 |

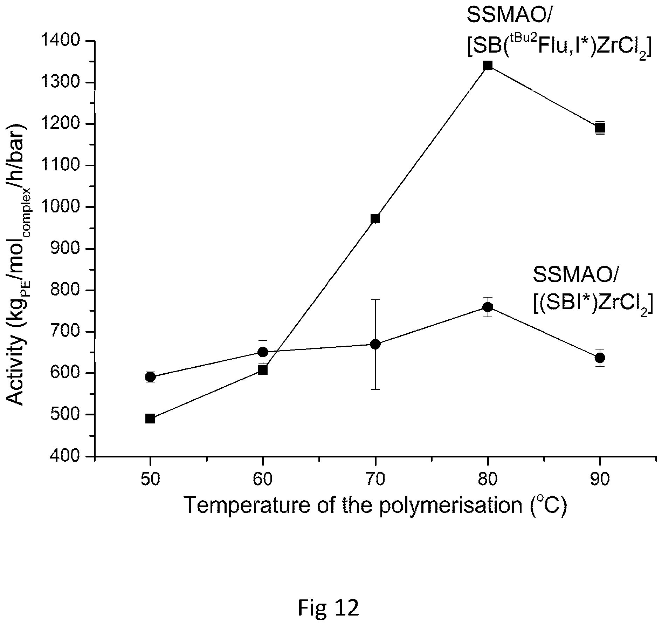

Table 3 shown below and Fig. 12 provide activity results (kg_{PE}/mol_{complex}/h/bar) vs temperature for the slurry polymerisation of ethylene using SSMAO/[complex]. Polymerisation conditions: 10 mg catalyst, 50 mL hexanes, 2 bar, 70 °C and [TIBA]₀/[Zr]₀ = 1000.

**Table 3 - Activity results (kg_{PE}/mol_{complex}/h/bar) for the slurry polymerisation of ethylene using SSMAO/[complex]**

| **Complex** | Temperature (°C) | | | | |
|---|---|---|---|---|---|
| | 50 | 60 | 70 | 80 | 90 |
| **[SB(^{tBu₂}Flu,I*)ZrCl₂]** | 491±5 | 607±4 | 973±4 | 1340±9 | 1191±15 |
| **[(*rac*-SBI*)ZrCl₂]** | 591±12 | 651±28 | 669±108 | 759±24 | 637±20 |

Having regard to the data provided in Tables 2 and 3, and in Figs. 11 and 12, the unsymmetrical catalyst SSMAO/ [SB(^{tBu₂}Flu,I*)ZrCl₂] of the present invention is 1.5 to 2.0 times faster than the similar symmetrical SSMAO/ *rac*-[(SBI*)ZrCl₂] comparative system under typical industrial ethylene polymerisation conditions (temperature: 70-80 °C, time of polymerisation: 1-2 h).

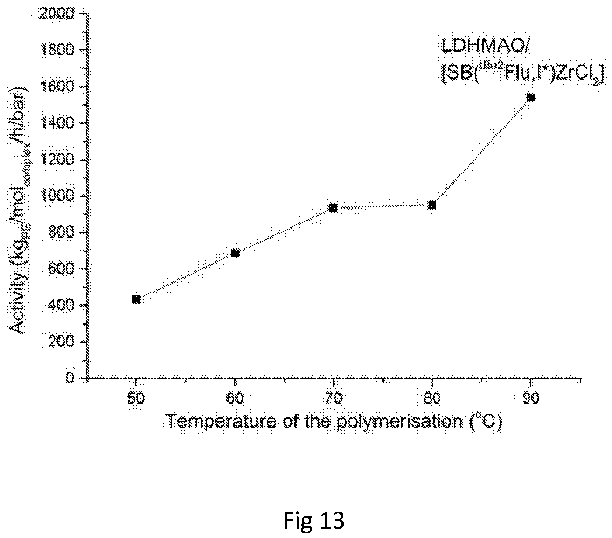

Table 4 shown below and Fig. 13 provide activity results (kg_{PE}/mol_{complex}/h/bar) vs temperature for the slurry polymerisation of ethylene using LDHMAO/[SB(^{tBu₂}Flu,I*)ZrCl₂]. Polymerisation conditions: 10 mg catalyst, 50 mL hexanes, 2 bar, 1 h and [TIBA]₀/[Zr]₀ = 1000.

**Table 4 - Activity results (kg_{PE}/mol_{complex}/h/bar) for the slurry polymerisation of ethylene using LDHMAO/[complex]**

| **Complex** | Temperature (°C) | | | | |
|---|---|---|---|---|---|
| | 50 | 60 | 70 | 80 | 90 |
| **[SB(^{tBu₂}Flu,I*)ZrCl₂]** | 430±42 | 687±144 | 932±268 | 951±4 | 1542±182 |

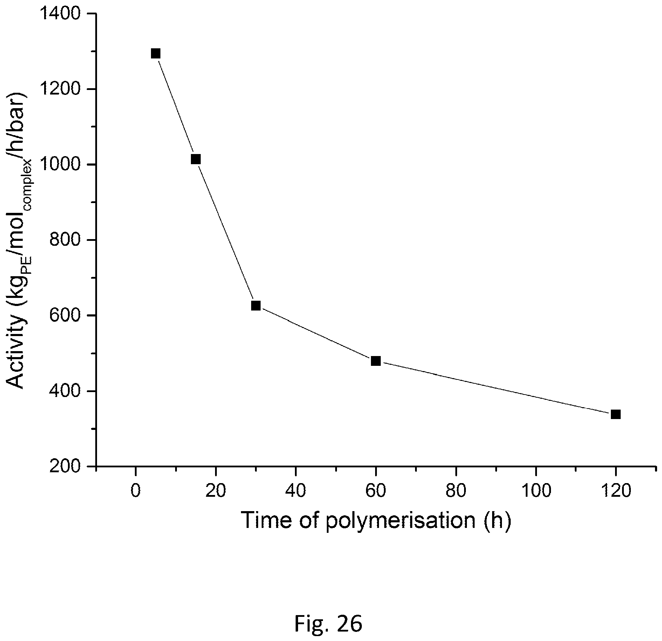

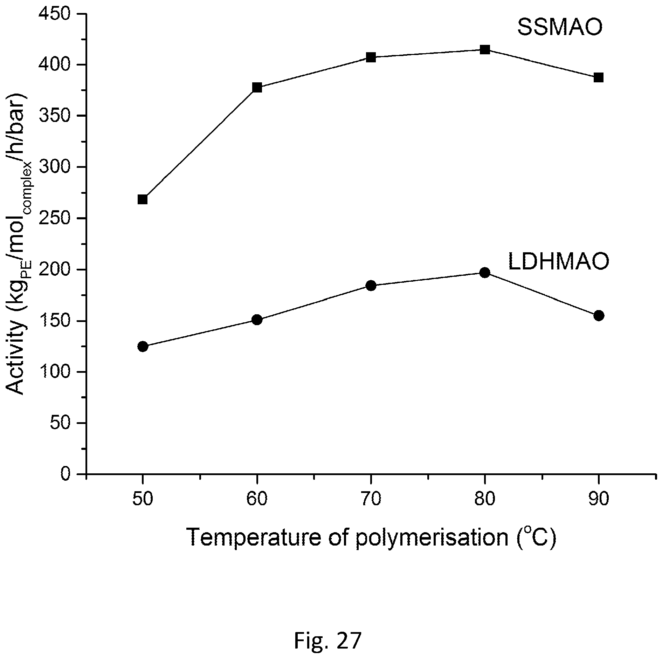

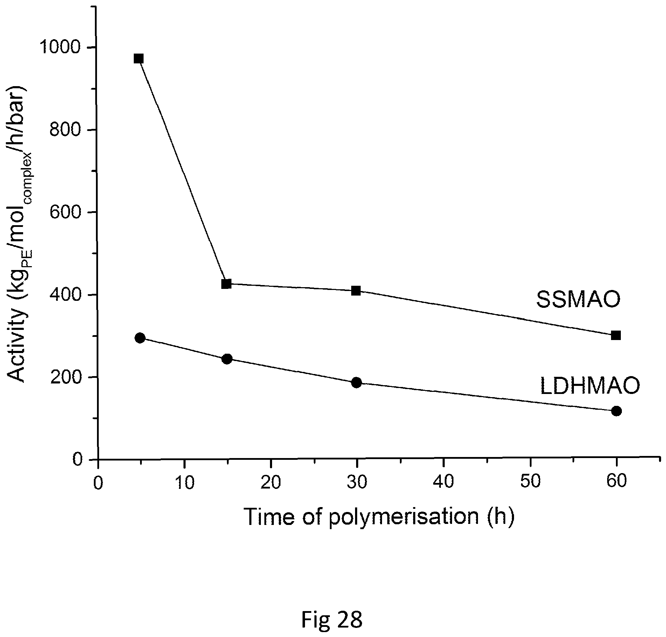

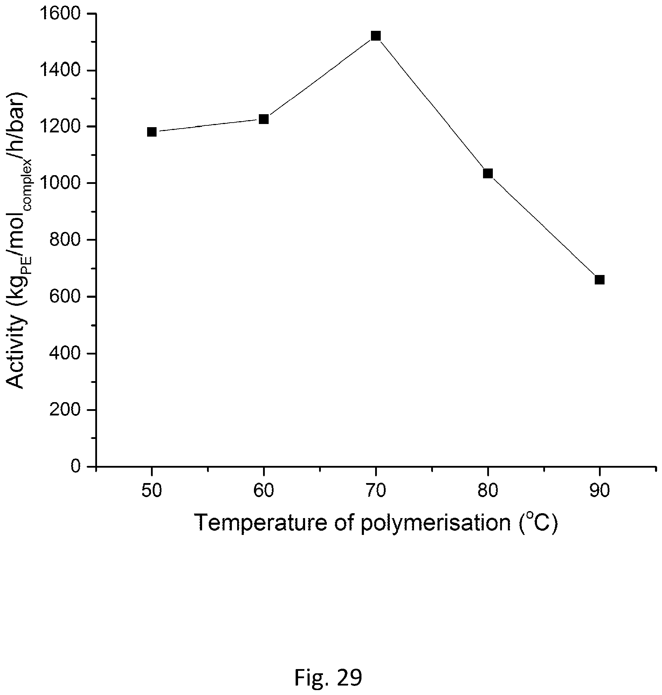

Figures 26 to 29 provide slurry ethylene polymerisation activity data for SB(^{tBu₂}Flu,I*)ZrCl₂, SB(^{tBu₂}Flu,I*)HfCl₂ and ^{Et2}SB(^{tBu₂}Flu,I*)ZrCl₂ when supported on aluminoxane treated layered double hydroxide or aluminoxane treated silica.

### REFERENCES

1 J. Cosier, A. M. Glazer, J. Appl. Cryst. 19 (1986) 105
2 Z. Otwinowski, W. Minor, Methods Enzymol. 276 (1997) 307
3 L. Palatinus, G. Chapuis, J. Appl. Cryst. 40 (2007) 786
4 P. W. Betteridge, J. R. Carruthers, R. I. Cooper, K. Prout, D. J. Watkin, J. Appl. Cryst. 36 (2003) 1487
5 R. I. Cooper, A. L. Thompson, D. J. Watkin, J. Appl. Cryst. 43 (2010) 1100

## Claims

1. A compound of the formula I shown below: 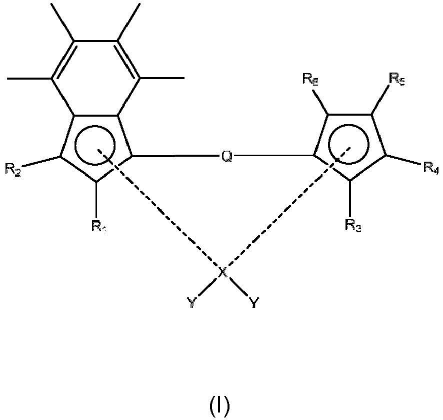 wherein:
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Q is a bridging group comprising 1, 2 or 3 bridging atoms selected from C, N, O, S, Ge, Sn, P, B, or Si, or a combination thereof, and is optionally substituted with one or more groups selected from hydroxyl, (1-6C)alkyl, (2-6C)alkenyl, (2-6C)alkynyl, (1-6C)alkoxy and aryl;
X is selected from zirconium, titanium or hafnium; and
each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, (1-6C)alkoxy, -C(O)NRₓR_{y}, or Si[(1-4C)alkyl]₃;
wherein Rₓ and R_{y} are independently (1-4C)alkyl;
with the proviso that:
i) when R₃ and R₄ are hydrogen or (1-4C)alkyl, R₅ and R₆ are not linked to form a fused 6-membered aromatic ring that is substituted with four methyl groups; and
ii) when R₅ and R₆ are hydrogen or (1-4C)alkyl, R₃ and R₄ are not linked to form a fused 6-membered aromatic ring that is substituted with four methyl groups.

2. A compound according to claim 1, wherein
R₃ and R₄ are each independently hydrogen or (1-4C)alkyl, or R₃ and R₄ are linked such that, when taken in combination with the atoms to which they are attached, they form a fused 6-membered aromatic ring optionally substituted with one or more groups selected from (1-4C)alkyl and phenyl, wherein each phenyl group is optionally substituted with one or more groups selected from (1-4C)alkyl, (2-4C)alkenyl, (2-4C)alkynyl, (1-4C)alkoxy, halo, amino and nitro; and
R₅ and R₆ are each independently hydrogen or (1-4C)alkyl, or R₅ and R₆ are linked such that, when taken in combination with the atoms to which they are attached, they form a fused 6-membered aromatic ring optionally substituted with one or more groups selected from (1-4C)alkyl and phenyl, wherein each phenyl group is optionally substituted with one or more groups selected from (1-4C)alkyl, (2-4C)alkenyl, (2-4C)alkynyl, (1-4C)alkoxy, halo, amino and nitro.

3. A compound according to any preceding claim, wherein
Q is a bridging group selected from -[C(Rₐ)(R_{b})-C(R_{c})(R_{d})]- and -[Si(Rₑ)(R_{f})]-, wherein
Rₐ, R_{b}, R_{c} and R_{d} are each hydrogen, and Rₑ and R_{f} are each independently (1-6C)alkyl, (2-6C)alkenyl or phenyl,
or
Q is a bridging group -[Si(Rₑ)(R_{f})]-, wherein Rₑ and R_{f} are each independently selected from methyl, ethyl, propyl, i-propyl, allyl or phenyl.

4. A compound according to any preceding claim,
wherein each Y is independently selected from halo or a (1-2C)alkyl group which is optionally substituted with halo, phenyl, or Si[(1-4C)alkyl]₃,
or
wherein each Y is halo.

5. A compound according to any preceding claim, wherein X is zirconium.

6. A compound according to any preceding claim, wherein the compound has any of
formulae (II), (III) or (IV) shown below: 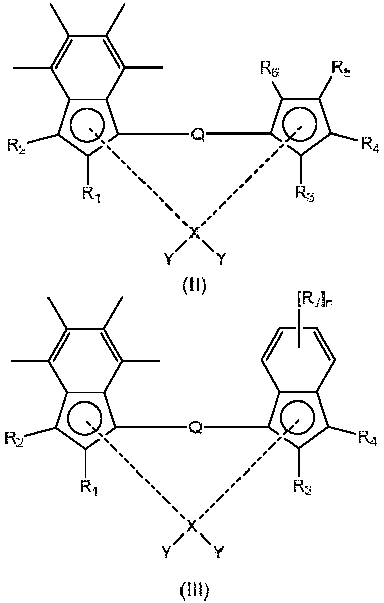 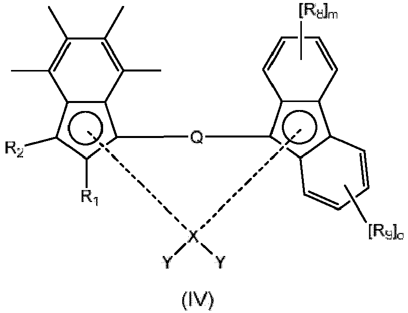 wherein:
R₁, R₂, R₃, R₄, Q, X and Y are each independently as defined in any preceding claim;
each R₇, R₈ and R₉ is independently selected from any of the ring substituents defined in any preceding claim;
n, m and o are independently 0, 1 or 2.

7. A compound according to claim 7, wherein each R₇, R₈ and R₉ is independently selected from hydrogen, methyl, n-butyl, tert-butyl and phenyl.

8. A compound according to any preceding claim, wherein the compound has any of formulae (V), (VI) or (VII) shown below: 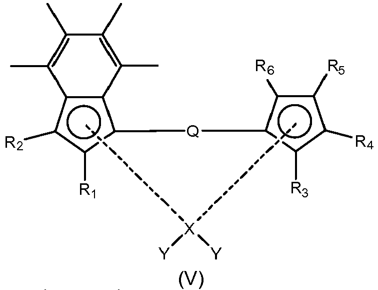 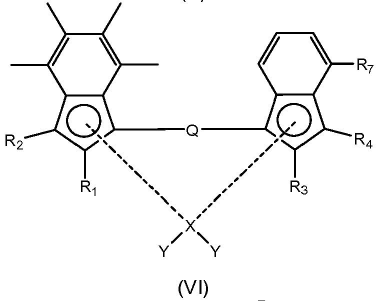 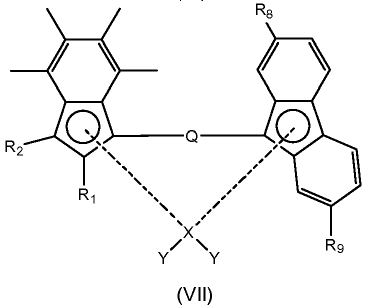 wherein
R₁, R₂, R₃, Q, X and Y are each independently as defined in any preceding claim;
R₇, R₈ and R₉ are each independently as defined in claim 7; and
R₄ is hydrogen.

9. A compound according to any preceding claim, where the compound has any one of the structures shown below:

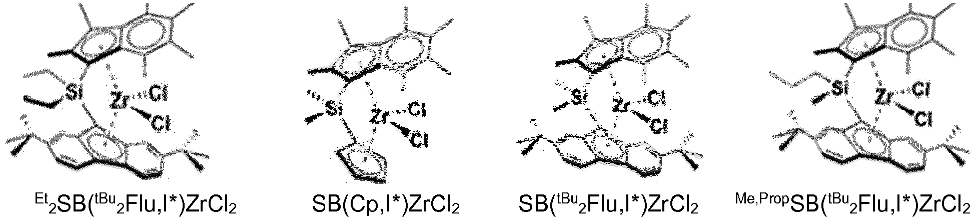

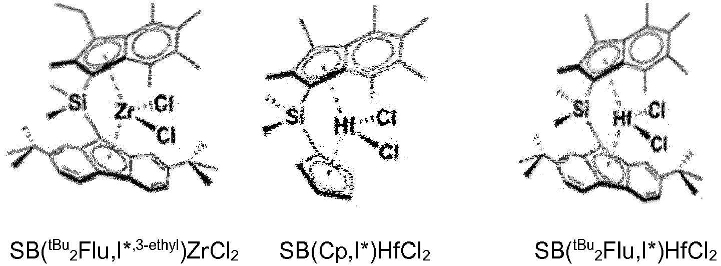

10. Use of a compound as claimed in any preceding claim as a polymerisation procatalyst in the preparation of:
a polyethylene homopolymer, or
a polyethylene copolymer formed from ethene monomers comprising 1-10 wt% of (4-8C) α-olefin.

11. A composition comprising a compound as claimed in any one of claims 1 to 9, and an alkyl aluminium compound,
optionally wherein
the alkyl aluminium compound is methylaluminoxane (MAO), triisobutylaluminium (TIBA), diethylaluminium (DEAC) or triethylaluminium (TEA).

12. The composition of claim 11, wherein the compound as claimed in any one of claims 1 to 9 is immobilized on a support or an activated support, wherein the activated support is methylaluminoxane-activated silica or methylaluminoxane-activated layered double hydroxide.

13. Use of a composition as claimed in claim 11 or 12 as a polymerisation catalyst in the preparation of:
a polyethylene homopolymer, or
a polyethylene copolymer formed from ethene monomers comprising 1-10 wt% of (4-8C) α-olefin.

14. A process for forming a polyethylene which comprises reacting olefin monomers in the presence of (i) a compound as claimed in any one of claims 1 to 9, and (ii) an alkyl aluminium compound.

15. The process of claim 14, wherein the compound as claimed in any one of claims 1 to 9 is immobilized on a support or an activated support selected from methylaluminoxane-activated silica or methylaluminoxane-activated layered double hydroxide.

16. The process of claim 14 or 15, wherein the olefin monomers are ethene monomers, optionally wherein the olefin monomers further comprise 1-10 wt% of (4-8C) α-olefin.

## Patentansprüche

1. Verbindung der nachstehend gezeigten Formel I: 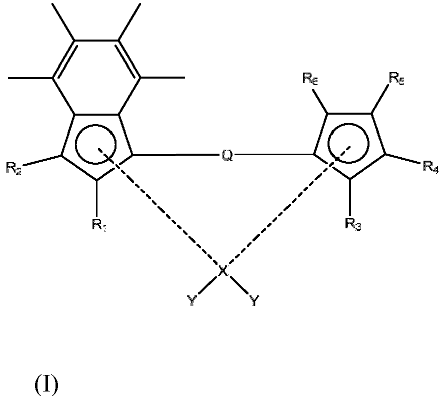 worin:
R₁ und R₂ jeweils unabhängig für (1-2C)-Alkyl stehen;
R₃ und R₄ jeweils unabhängig für Wasserstoff oder (1-4C)-Alkyl stehen, oder R₃ und R₄ derart verknüpft sind, dass sie zusammen mit den Atomen, an die sie gebunden sind, einen 6-gliedrigen kondensierten aromatischen Ring bilden, der gegebenenfalls durch eine oder mehrere Gruppen substituiert ist, die ausgewählt sind aus (1-6C)-Alkyl-, (2-6C)-Alkenyl-, (2-6C)-Alkinyl-, (1-6C)-Alkoxy-, Aryl-, Heteroaryl-, carbocyclischen und heterocyclischen Gruppen, wobei jede Aryl-, Heteroaryl-, carbocyclische und heterocyclische Gruppe gegebenenfalls durch eine oder mehrere Gruppen substituiert ist, die ausgewählt sind aus (1-6C)-Alkyl-, (2-6C)-Alkenyl-, (2-6C)-Alkinyl-, (1-6C)-Alkoxy-, Halogen-, Amino-, Nitro-, Cyano-, (1-6C)-Alkylamino-, [(1-6C)-Alkyl]₂-amino- und -S(O)₂(1-6C)-Alkylgruppen;
R₅ und R₆ jeweils unabhängig für Wasserstoff oder (1-4C)-Alkyl stehen, oder R₅ und R₆ derart verknüpft sind, dass sie zusammen mit den Atomen, an die sie gebunden sind, einen 6-gliedrigen kondensierten aromatischen Ring bilden, der gegebenenfalls durch eine oder mehrere Gruppen substituiert ist, die ausgewählt sind aus (1-6C)-Alkyl-, (2-6C)-Alkenyl-, (2-6C)-Alkinyl-, (1-6C)-Alkoxy-, Aryl-, Heteroaryl-, carbocyclischen und heterocyclischen Gruppen, wobei jede Aryl-, Heteroaryl-, carbocyclische und heterocyclische Gruppe gegebenenfalls durch eine oder mehrere Gruppen substituiert ist, die ausgewählt sind aus (1-6C)-Alkyl-, (2-6C)-Alkenyl-, (2-6C)-Alkinyl-, (1-6C)-Alkoxy-, Halogen-, Amino-, Nitro-, Cyano-, (1-6C)-Alkylamino-, [(1-6C)-Alkyl]₂-amino- und -S(O)₂(1-6C)-Alkylgruppen;
Q eine Brückengruppe ist, die 1, 2 oder 3 Brückenatome umfasst, die ausgewählt sind aus C, N, O, S, Ge, Sn, P, B oder Si, oder einer Kombination davon, und die gegebenenfalls durch eine oder mehrere Gruppen substituiert ist, die ausgewählt sind aus Hydroxyl-, (1-6C)-Alkyl-, (2-6C)-Alkenyl-, (2-6C)-Alkinyl-, (1-6C)-Alkoxy- und Arylgruppen;
X ausgewählt ist aus Zirconium, Titan oder Hafnium; und
jede Y-Gruppe unabhängig ausgewählt ist aus Halogen, Hydrid, einem phosphonierten, sulfonierten oder Boratanion oder einer (1-6C)-Alkyl-, (2-6C)-Alkenyl-, (2-6C)-Alkinyl-, (1-6C)-Alkoxy-, Aryl- oder Aryloxygruppe, die gegebenenfalls durch eine oder mehrere Gruppen substituiert ist, die ausgewählt sind aus (1-6C)-Alkyl-, Halogen-, Nitro-, Amino-, Phenyl-, (1-6C)-Alkoxy-, -C(O)NRₓR_{y}- oder Si[(1-4C)-Alkyl]₃-Gruppen;
worin Rₓ und R_{y} unabhängig für (1-4C)-Alkyl stehen;
mit der Maßgabe, dass:
i) wenn R₃ und R₄ für Wasserstoff oder (1-4C)-Alkyl stehen, R₅ und R₆ nicht zur Bildung eines 6-gliedrigen kondensierten aromatischen Rings, der durch vier Methylgruppen substituiert ist, verknüpft sind; und
ii) wenn R₅ und R₆ für Wasserstoff oder (1-4C)-Alkyl stehen, R₃ und R₄ nicht zur Bildung eines 6-gliedrigen kondensierten aromatischen Rings, der durch vier Methylgruppen substituiert ist, verknüpft sind.

2. Verbindung nach Anspruch 1, wobei
R₃ und R₄ jeweils unabhängig für Wasserstoff oder (1-4C)-Alkyl stehen, oder R₃ und R₄ derart verknüpft sind, dass sie zusammen mit den Atomen, an die sie gebunden sind, einen 6-gliedrigen kondensierten aromatischen Ring bilden, der gegebenenfalls durch eine oder mehrere Gruppen substituiert ist, die ausgewählt sind aus (1-4C)-Alkyl- und Phenylgruppen, wobei jede Phenylgruppe gegebenenfalls durch eine oder mehrere Gruppen substituiert ist, die ausgewählt sind aus (1-4C)-Alkyl-, (2-4C)-Alkenyl-, (2-4C)-Alkinyl-, (1-4C)-Alkoxy-, Halogen-, Amino-, und Nitrogruppen; und
R₅ und R₆ jeweils unabhängig für Wasserstoff oder (1-4C)-Alkyl stehen, oder R₅ und R₆ derart verknüpft sind, dass sie zusammen mit den Atomen, an die sie gebunden sind, einen 6-gliedrigen kondensierten aromatischen Ring bilden, der gegebenenfalls durch eine oder mehrere Gruppen substituiert ist, die ausgewählt sind aus (1-4C)-Alkyl- und Phenylgruppen, wobei jede Phenylgruppe gegebenenfalls durch eine oder mehrere Gruppen substituiert ist, die ausgewählt sind aus (1-4C)-Alkyl-, (2-4C)-Alkenyl-, (2-4C)-Alkinyl-, (1-4C)-Alkoxy-, Halogen-, Amino-, und Nitrogruppen.

3. Verbindung nach einem der vorhergehenden Ansprüche, wobei
Q eine Brückengruppe ist, die ausgewählt ist aus -[C(Rₐ)(R_{b})-C(R_{c})(R_{d})]- und -[Si(Rₑ)(R_{f})]-, worin
Rₐ, R_{b}, R_{c} und R_{d} jeweils für Wasserstoff stehen und Rₑ und R_{f} jeweils unabhängig für (1-6C)-Alkyl, (2-6C)-Alkenyl oder Phenyl stehen,
oder
Q eine Brückengruppe -[Si(Rₑ)(R_{f})]- ist, worin Rₑ und R_{f} jeweils unabhängig ausgewählt sind aus Methyl, Ethyl, Propyl, i-Propyl, Allyl oder Phenyl.

4. Verbindung nach einem der vorhergehenden Ansprüche,
wobei jedes Y unabhängig ausgewählt ist aus Halogen oder einer (1-2C)-Alkylgruppe, die gegebenenfalls durch Halogen, Phenyl oder Si[(1-4C)-Alkyl]₃ substituiert ist,
oder
worin jedes Y für Halogen steht.

5. Verbindung nach einem der vorhergehenden Ansprüche, wobei X für Zirconium steht.

6. Verbindung nach einem der vorhergehenden Ansprüche, wobei die Verbindung eine der nachstehend gezeigten Formeln (II), (III) oder (IV) aufweist: 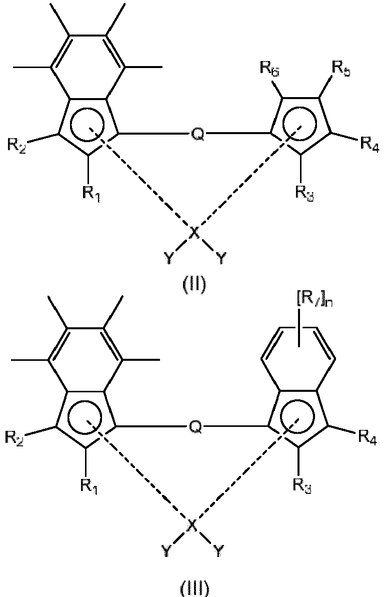 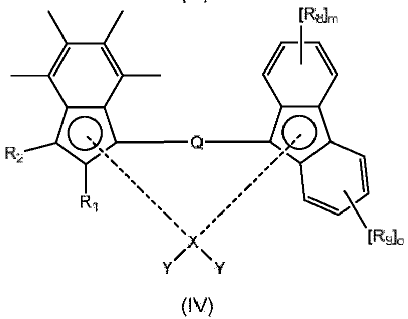 worin:
R₁, R₂, R₃, R₄, Q, X und Y jeweils unabhängig wie in einem der vorhergehenden Ansprüche definiert sind;
jedes R₇, R₈ und R₉ unabhängig aus einem der Ringsubstituenten, die in einem der vorhergehenden Ansprüche definiert sind, ausgewählt ist;
n, m und o unabhängig für 0, 1 oder 2 stehen.

7. Verbindung nach Anspruch 7, wobei jedes R₇, R₈ und R₉ unabhängig aus Wasserstoff, Methyl, n-Butyl, tert-Butyl und Phenyl ausgewählt ist.

8. Verbindung nach einem der vorhergehenden Ansprüche, wobei die Verbindung eine der nachstehend gezeigten Formeln (V), (VI) oder (VII) aufweist: 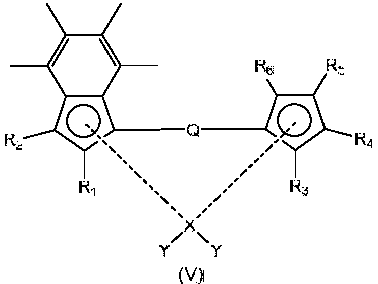 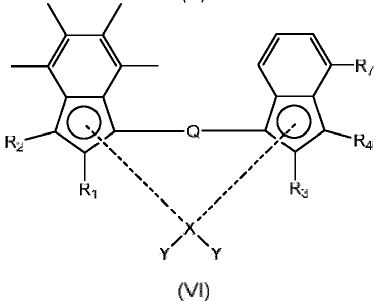 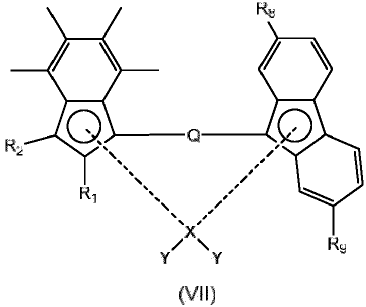 worin
R₁, R₂, R₃, Q, X und Y jeweils unabhängig wie in einem der vorhergehenden Ansprüche definiert sind;
R₇, R₈ und R₉ jeweils unabhängig wie in Anspruch 7 definiert sind; und
R₄ für Wasserstoff steht.

9. Verbindung nach einem der vorhergehenden Ansprüche, wobei die Verbindung eine der nachstehend gezeigten Strukturen aufweist:

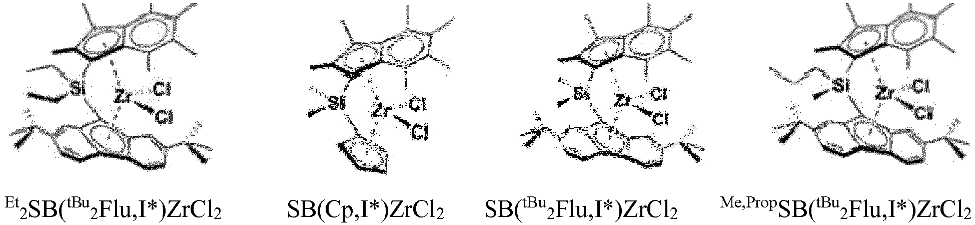

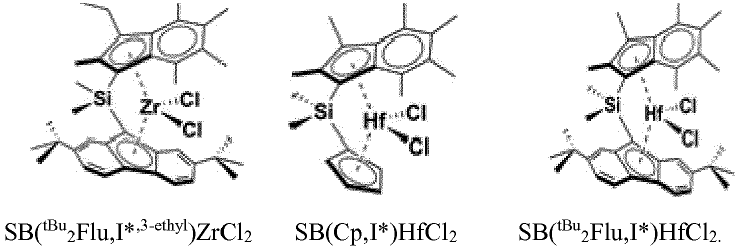

10. Verwendung einer Verbindung nach einem der vorhergehenden Ansprüche als Polymerisationsprokatalysator bei der Herstellung von:
einem Polyethylenhomopolymer oder
einem Polyethylencopolymer, das aus Ethenmonomeren gebildet wird, die 1 bis 10 Gew.-% eines (4-8C)-α-Olefins umfassen.

11. Zusammensetzung, die eine Verbindung nach einem der Ansprüche 1 bis 9 und eine Alkylaluminiumverbindung umfasst,
wobei es sich
bei der Alkylaluminiumverbindung gegebenenfalls um Methylaluminoxan (MAO), Triisobutylaluminium (TIBA), Diethylaluminium (DEAC) oder Triethylaluminium (TEA) handelt.

12. Zusammensetzung nach Anspruch 11, wobei die Verbindung nach einem der Ansprüche 1 bis 9 auf einem Träger oder einem aktivierten Träger immobilisiert wird, wobei es sich bei dem aktivierten Träger um mit Methylaluminoxan aktiviertes Silicium oder um ein mit Methylaluminoxan aktiviertes, geschichtetes doppeltes Hydroxid handelt.

13. Verwendung einer Verbindung nach einem der Ansprüche 11 oder 12 als Polymerisationskatalysator bei der Herstellung von:
einem Polyethylenhomopolymer oder einem Polyethylencopolymer, das aus Ethenmonomeren gebildet wird, die 1 bis 10 Gew.-% eines (4-8C)-α-Olefins umfassen.

14. Verfahren zum Bilden eines Polyethylens, das das Umsetzen von Olefinmonomeren in Gegenwart von (i) einer Verbindung nach einem der Ansprüche 1 bis 9 und (ii) einer Alkylaluminiumverbindung umfasst.

15. Verfahren nach Anspruch 14, wobei die Verbindung nach einem der Ansprüche 1 bis 9 auf einem Träger oder einem aktivierten Träger immobilisiert wird, der aus mit Methylaluminoxan aktiviertem Silicium oder mit Methylaluminoxan aktiviertem, geschichteten doppelten Hydroxid ausgewählt ist.

16. Verfahren nach Anspruch 14 oder 15, wobei es sich bei den Olefinmonomeren um Ethenmonomere handelt, wobei die Olefinmonomere ferner gegebenenfalls 1 bis 10 Gew.-% eines (4-8C)-α-Olefins umfassen.

## Revendications

1. Composé de formule I représenté ci-dessous : 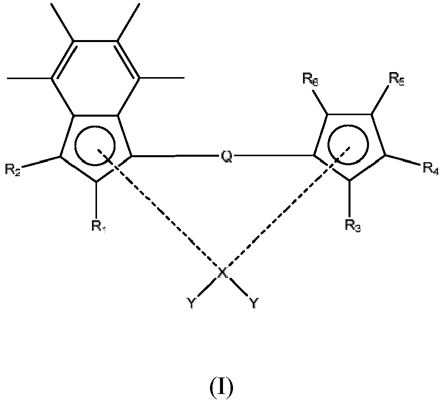 dans lequel :
R₁ et R₂ sont chacun indépendamment un alkyle en (C1 à 2) ;
R₃ et R₄ sont chacun indépendamment un hydrogène ou un alkyle en (C1 à 4), ou R₃ et R₄ sont liés de sorte que, quand ils sont pris en combinaison avec les atomes auxquels ils sont attachés, ils forment un noyau aromatique condensé de 6 éléments facultativement substitué avec un ou plusieurs groupes sélectionnés parmi un alkyle en (C1 à 6), un alcényle en (C2 à 6), un alcynyle en (C2 à 6), un alcoxy en (C1 à 6), un aryle, un hétéroaryle, un groupe carboxylique et un groupe hétérocyclique, dans lequel chaque groupe aryle, hétéroaryle, carbocyclique et hétérocyclique est facultativement substitué avec un ou plusieurs groupes sélectionnés parmi un alkyle en (C1 à 6), un alcényle en (C2 à 6), un alcynyle en (C2 à 6), un alcoxy en (C1 à 6), un halo, un amino, un nitro, un cyano, un alkylamino en (C1 à 6), [alkyle en (C1 à 6)]₂amino et - S(O)₂alkyle en (C1 à 6) ;
R₅ et R₆ sont chacun indépendamment un hydrogène ou un alkyle en (C1 à 4), ou R₅ et R₆ sont liés de sorte que, quand ils sont pris en combinaison avec les atomes auxquels ils sont attachés, ils forment un noyau aromatique condensé de 6 éléments facultativement substitué avec un ou plusieurs groupes sélectionnés parmi un alkyle en (C1 à 6), un alcényle en (C2 à 6), un alcynyle en (C2 à 6), un alcoxy en (C1 à 6), un aryle, un hétéroaryle, un groupe carboxylique et un groupe hétérocyclique, dans lequel chaque groupe aryle, hétéroaryle, carbocyclique et hétérocyclique est facultativement substitué avec un ou plusieurs groupes sélectionnés parmi un alkyle en (C1 à 6), un alcényle en (C2 à 6), un alcynyle en (C2 à 6), un alcoxy en (C1 à 6), un halo, un amino, un nitro, un cyano, un alkylamino en (C1 à 6), [alkyle en (C1 à 6)]₂amino et - S(O)₂alkyle en (C1 à 6) ;
Q est un groupe de pontage comprenant 1, 2 ou 3 atomes de pontage choisis parmi C, N, O, S, Ge, Sn, P, B, ou Si, ou une combinaison de ceux-ci, et est facultativement substitué avec un ou plusieurs groupes sélectionnés parmi un hydroxyle, un alkyle en (C1 à 6), un alcényle en (C2 à 6), un alcynyle en (C2 à 6), un alcoxy en (C1 à 6) et un aryle ;
X est choisi parmi un zirconium, un titane ou un hafnium ; et
chaque groupe Y est indépendamment choisi parmi un halo, un hydrure, un anion phosphoné, sulfoné ou borate, ou un groupe alkyle en (C1 à 6), alcényle en (C2 à 6), alcynyle en (C2 à 6), alcoxy (C1 à 6), aryle ou aryloxy qui est facultativement substitué avec un ou plusieurs groupes sélectionnés parmi un alkyle en (C1 à 6), un halo, un nitro, un amino, un phényle, un alcoxy en (C1 à 6), -C(O)NRₓR_{y}, ou Si[alkyle en (C1 à 4)]₃ ;
dans lequel Rₓ et R_{y} sont indépendamment un alkyle en (C1 à 4) ;
à condition que :
i) quand R₃ et R₄ sont un hydrogène ou un alkyle en (C1 à 4), R₅ et R₆ ne soient pas liés pour former un noyau aromatique condensé de 6 éléments qui est substitué avec quatre groupes méthyle ; et
ii) quand R₅ et R₆ sont un hydrogène ou un alkyle en (C1 à 4), R₃ et R₄ ne soient pas liés pour former un noyau aromatique condensé de 6 éléments qui est substitué avec quatre groupes méthyle.

2. Composé selon la revendication 1, dans lequel
R₃ et R₄ sont chacun indépendamment un hydrogène ou un alkyle en (C1 à 4), ou R₃ et R₄ sont liés de sorte que, quand ils sont pris en combinaison avec les atomes auxquels ils sont attachés, ils forment un noyau aromatique condensé de 6 éléments facultativement substitué avec un ou plusieurs groupes sélectionnés parmi un alkyle en (C1 à 4) et un phényle, dans lequel chaque groupe phényle est facultativement substitué avec un ou plusieurs groupes sélectionnés parmi un alkyle en (C1 à 4), un alcényle en (C2 à 4), un alcynyle en (C2 à 4), un alcoxy en (C1 à 4), un halo, un amino et un nitro ; et
R₅ et R₆ sont chacun indépendamment un hydrogène ou un alkyle en (C1 à 4), ou R₅ et R₆ sont liés de sorte que, quand ils sont pris en combinaison avec les atomes auxquels ils sont attachés, ils forment un noyau aromatique condensé de 6 éléments facultativement substitué avec un ou plusieurs groupes sélectionnés parmi un alkyle en (C1 à 4) et un phényle, dans lequel chaque groupe phényle est facultativement substitué avec un ou plusieurs groupes sélectionnés parmi un alkyle en (C1 à 4), un alcényle en (C2 à 4), un alcynyle en (C2 à 4), un alcoxy en (C1 à 4), un halo, un amino et un nitro.

3. Composé selon l'une quelconque des revendications précédentes, dans lequel
Q est un groupe de pontage choisi parmi -[C(Rₐ)(R_{b})-C(R_{c})(R_{d})]- et -[Si(Rₑ)(R_{f})]-, dans lequel
Rₐ, R_{b}, R_{c} et R_{d} sont chacun un hydrogène, et Rₑ et R_{f} sont chacun indépendamment un alkyle en (C1 à 6), un alcényle en (C2 à 6) ou un phényle,
ou
Q est un groupe de pontage -[Si(Rₑ)(R_{f})]-, dans lequel Rₑ et Rf sont chacun indépendamment choisis parmi un méthyle, un éthyle, un propyle, un i-propyle, un allyle ou un phényle.

4. Composé selon l'une quelconque des revendications précédentes,
dans lequel chaque Y est indépendamment choisi parmi un halo ou un groupe alkyle en (C1 à 2) qui est facultativement substitué avec un halo, un phényle, ou Si[alkyle en (C1 à 4)]₃,
ou
dans lequel chaque Y est un halo.

5. Composé selon l'une quelconque des revendications précédentes, dans lequel X est un zirconium.

6. Composé selon l'une quelconque des revendications précédentes, dans lequel le composé a l'une quelconque des formules (II), (III) ou (IV) représentées ci-dessous : 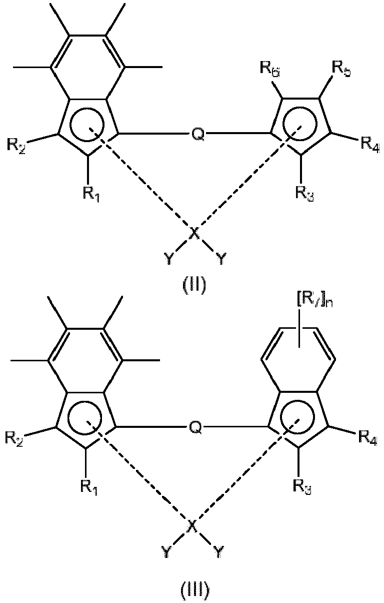 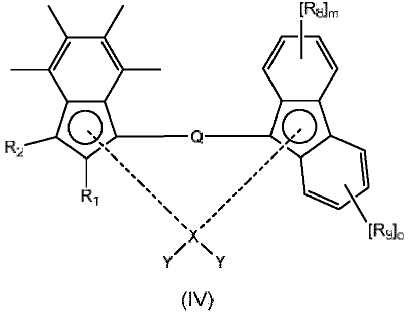 dans lequel :
R₁, R₂, R₃, R₄, Q, X et Y sont chacun indépendamment tels que définis dans l'une quelconque des revendications précédentes ;
chaque R₇, R₈ et R₉ est indépendamment choisi parmi l'un quelconque des substituants de noyau définis dans l'une quelconque des revendications précédentes ;
n, m et o sont indépendamment 0, 1 ou 2.

7. Composé selon la revendication 7, dans lequel chaque R₇, R₈ et R₉ est indépendamment choisi parmi un hydrogène, un méthyle, un n-butyle, un tert-butyle et un phényle.

8. Composé selon l'une quelconque des revendications précédentes, dans lequel le composé a l'une quelconque des formules (V), (VI) ou (VII) représentées ci-dessous : 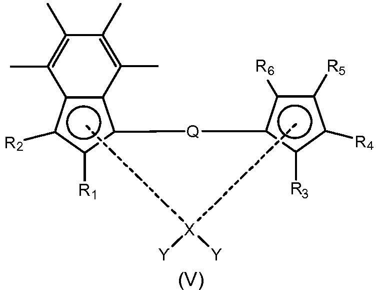 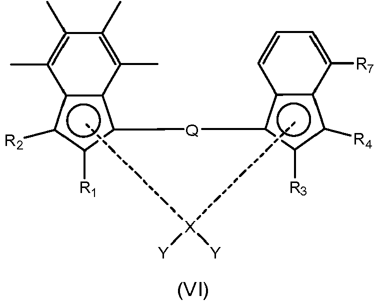 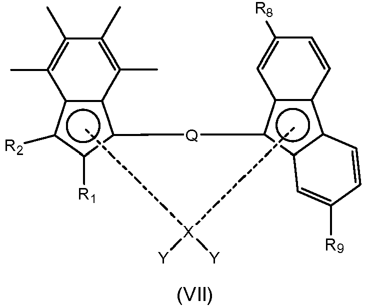 dans lequel
R₁, R₂, R₃, Q, X et Y sont chacun indépendamment tels que définis dans l'une quelconque des revendications précédentes ;
R₇, R₈ et R₉ sont chacun indépendamment tels que définis dans la revendication 7 ; et
R₄ est un hydrogène.

9. Composé selon l'une quelconque des revendications précédentes, où le composé a l'une quelconque des structures représentées ci-dessous :

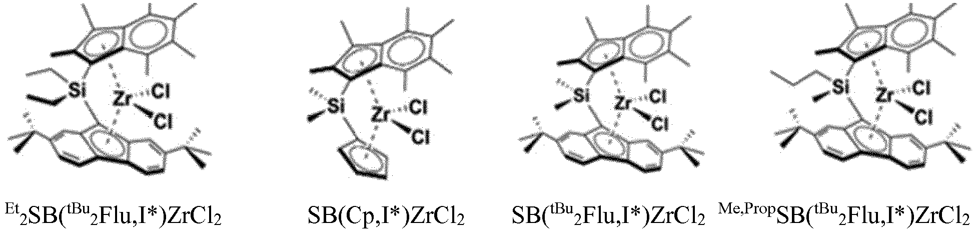

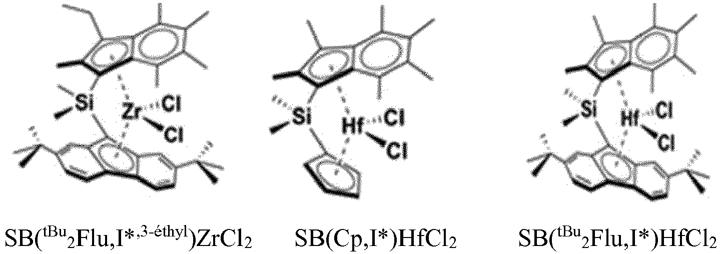

10. Utilisation d'un composé selon l'une quelconque des revendications précédentes comme un procatalyseur de polymérisation dans la préparation :
d'un homopolymère de polyéthylène, ou
d'un copolymère de polyéthylène formé à partir de monomères d'éthène comprenant de 1 à 10 % en poids d'alpha-oléfine en (C4 à 8).

11. Composition comprenant un composé selon l'une quelconque des revendications 1 à 9, et un composé d'aluminium-alkyle,
facultativement dans laquelle
le composé d'aluminium-alkyle est un méthylaluminoxane (MAO), un triisobutylaluminium (TIBA), un diéthylaluminium (DEAC) ou un triéthylaluminium (TEA).

12. Composition selon la revendication 11, dans laquelle le composé selon l'une quelconque des revendications 1 à 9 est immobilisé sur un support ou un support activé, dans laquelle le support activé est une silice activée par du méthylaluminoxane ou un hydroxyde double lamellaire activé par du méthylaluminoxane.

13. Utilisation d'une composition selon la revendication 11 ou 12 comme un catalyseur de polymérisation dans la préparation :
d'un homopolymère de polyéthylène, ou d'un copolymère de polyéthylène formé à partir de monomères d'éthène comprenant de 1 à 10 % en poids d'alpha-oléfine en (C4 à 8).

14. Procédé de formation d'un polyéthylène qui comprend la mise en réaction de monomères d'oléfine en présence (i) d'un composé selon l'une quelconque des revendications 1 à 9, et (ii) d'un composé d'aluminium-alkyle.

15. Procédé selon la revendication 14, dans lequel le composé selon l'une quelconque des revendications 1 à 9 est immobilisé sur un support ou un support activé sélectionné parmi une silice activée par du méthylaluminoxane ou un hydroxyde double lamellaire activé par du méthylaluminoxane.

16. Procédé selon la revendication 14 ou 15, dans lequel les monomères d'oléfine sont des monomères d'éthène facultativement dans lequel les monomères d'oléfine comprennent de 1 à 10 % en poids d'alpha-oléfine en (C4 à 8).
